# FASCICULE DE BREVET EUROPEEN

(11) **EP 4 306 837 B1**
(45) Date de publication et mention de la délivrance du brevet: **25.12.2024**
(21) Numéro de dépôt: 23185309.4
(22) Date de dépôt: 13.07.2023
(51) Int. Cl.: F16L 37/092, F16L 37/40, F16L 37/42

(54) **ÉLÉMENT DE RACCORD POUR UN RACCORDEMENT FLUIDIQUE À UN TERMINAL**
ANSCHLUSSELEMENT FÜR EINE FLUIDVERBINDUNG AN EIN ENDGERÄT
CONNECTOR ELEMENT FOR A FLUID CONNECTION TO A TERMINAL

(30) Priorité: 15.07.2022 FR 2207281
(43) Date de publication de la demande: 17.01.2024
(73) Titulaire: Staubli Faverges, 74210 Faverges-Seythenex (FR)
(72) Inventeur: DURIEUX, Christophe, 73200 GILLY SUR ISERE (FR); MARQUES BARROCA, Serafim, 73200 ALBERTVILLE (FR)
(74) Mandataire: Lavoix

(56) Documents cités:
- EP-A2- 2 039 974
- US-A1- 2005 127 114
- US-B1- 6 375 152

## Description

La présente invention concerne un élément de raccord, pour un raccordement fluidique à un terminal ayant une interface à enveloppe cylindrique.

La demande de brevet français FR2101122, non publiée à la date pertinente, décrit un élément de raccord avec des patins, reçus dans des logements respectifs d'une douille, et coulissant le long d'un corps à portion conique. La position axiale les patins le long de la portion conique détermine la position radiale des patins. Les patins servent à solidariser un terminal à interface cylindrique. Cette construction fait que l'élément de raccord est capable de s'accoupler avec des terminaux de dimensions différentes, puisque les patins s'adaptent à la taille du terminal reçu en se positionnant axialement le long de la portion conique lors de l'accouplement. Une autre particularité de cette construction est que les patins, lorsqu'ils sont en position radiale de serrage pour maintenir un terminal accouplé, sont dans une position axiale qui est intermédiaire entre, d'une part, la position axiale des patins lorsque l'élément de raccord est désaccouplé, et d'autre part, la position axiale des patins permettant de retirer le terminal qui était accouplé. En effet, la géométrie du terminal conditionne la position axiale et radiale des patins, donc aussi la position du terminal au sein de l'élément de raccord lorsqu'il y est accouplé. Un exemple prévoit que la portion conique et les patins sont tournés radialement vers l'extérieur pour maintenir un terminal à interface cylindrique intérieure en configuration accouplée. Dans cet exemple, l'élément de raccord reste ouvert, c'est-à-dire que son conduit interne est ouvert, lorsqu'il n'est pas accouplé avec un terminal, ce qui n'est pas adapté à certaines applications exigeant que l'élément de raccord se ferme, c'est-à-dire que son conduit interne soit fermé, une fois désaccouplé. Un autre exemple prévoit que la portion conique et les patins sont tournés radialement vers l'intérieur pour maintenir un terminal à interface cylindrique extérieure en configuration accouplée. Pour cet autre exemple, l'élément de raccord comprend une bague qui jour le rôle d'un clapet, pour fermer automatiquement l'élément de raccord lorsqu'il est désaccouplé. A l'accouplement avec le terminal, on prévoit qu'une bague d'appui, entraînée vers l'arrière par le terminal, entraîne elle-même le clapet vers l'arrière pour ouvrir l'élément de raccord. Du fait de cette construction, l'entraînement de la bague-clapet par la bague d'appui est tributaire de la profondeur d'engagement de l'interface sur les patins ainsi que du diamètre de l'interface externe. Cela conduit généralement à prévoir que l'élément de raccord présente un fort encombrement, notamment dans le sens longitudinal, pour que la bague-clapet soit à la fois ouverte en configuration accouplée et fermée en configuration désaccouplée, quelle que soit la géométrie de l'engagement de l'interface sur les patins pour un terminal susceptible d'être maintenu accouplé à l'aide des patins.

US6375152B1 décrit un élément de raccord à connexion rapide, apte à s'accoupler avec un connecteur par l'intérieur dudit connecteur. L'élément de raccord comprend un corps tubulaire, des dents de retenue accrochées à une extrémité de sortie du corps tubulaire, une manche coulissante reçue à l'intérieur du corps pour actionner les dents, un clapet, pour fermer le corps tubulaire, et un piston d'étanchéité, monté sur le clapet via une rotule. L'élément de raccord comprend aussi un ressort pour ramener le clapet vers l'avant, en position de fermeture contre la manche, un ressort pour ramener la manche coulissante vers l'avant jusqu'à une position où la manche maintient les dents en position de verrouillage du connecteur, et un ressort annulaire ramenant les dents radialement vers l'intérieur, en position de déverrouillage du connecteur, lorsque la manche coulissante ne s'y oppose pas. En configuration accouplée, une paroi avant interne du connecteur vient en appui étanche contre le piston d'étanchéité, par l'intermédiaire duquel le connecteur maintient le clapet en position d'ouverture, en arrière par rapport à la manche coulissante. En configuration accouplée, les dents retiennent le connecteur par l'intérieur, en étant maintenues en position par la manche coulissante, qui est dans une position avancée, radialement à l'intérieur des dents. Pour désaccoupler, on déplace la manche coulissante vers la position reculée contre l'action du ressort, ce qui autorise les dents à être ramenées radialement vers l'intérieur sous l'action du ressort annulaire, les dents libérant alors le connecteur. La manche étant tirée vers l'arrière, elle vient en appui contre le clapet, ce qui ferme l'élément de raccord. Le connecteur désaccouplé ne retient plus le clapet vers l'arrière. Ainsi, lorsque l'on relâche la manche coulissante et que le connecteur a été désaccouplé, le clapet et la manche coulissante sont ramenés vers l'avant sous l'action des ressorts, tout en maintenant l'élément de raccord fermé.

Selon cette construction, la position du clapet, définissant si l'élément de raccord est ouvert ou non, dépend entièrement de la géométrie du connecteur qui y est accouplé, puisque l'ouverture du clapet est effectuée par mise en appui du connecteur sur le clapet via le piston d'étanchéité. Par ailleurs, dans le cas où la géométrie du connecteur serait imprécise, ou si le connecteur est usé, il n'est pas garanti que l'ouverture du clapet soit optimale. Enfin, cette construction impose que le terminal dispose d'une paroi avant interne pour actionner le clapet, qui autorise seulement une section de passage très réduite pour le fluide et/ou un fort encombrement radial pour l'élément de raccord.

Un objectif de l'invention est notamment de remédier aux inconvénients susmentionnés. L'invention vise à proposer un nouvel élément de raccord qui, tout en étant apte au raccordement fluidique avec un terminal présentant une interface à enveloppe cylindrique susceptible de variations dimensionnelles, s'ouvre automatiquement et se ferme automatiquement lorsqu'il est désaccouplé du terminal et présente un encombrement réduit et/ou une section de passage de fluide augmentée.

L'invention a pour objet un élément de raccord, pour un raccordement fluidique à un terminal, le terminal ayant une interface à enveloppe cylindrique, l'élément de raccord comprenant :
- un corps de raccord, délimitant un conduit interne pour une circulation de fluide, le conduit interne s'étendant selon un axe longitudinal,
- un clapet, mobile en translation longitudinalement par rapport au corps de raccord dans le conduit interne, le clapet étant rappelé élastiquement dans une direction avant vers une position avant, où le clapet ferme le conduit interne, dans une configuration désaccouplée de l'élément de raccord, et
- des patins de serrage.

Selon l'invention, l'élément de raccord comprend :
- un corps de douille, disposé autour d'une première surface radiale du corps de raccord, la première surface radiale étant radialement tournée dans la direction opposée à l'axe longitudinal, le corps de douille étant mobile en translation longitudinalement par rapport au corps de raccord, chaque patin de serrage étant reçu dans un logement respectif appartenant au corps de douille, chaque patin de serrage étant déplacé en translation radialement par rapport au corps de douille, au sein de leur logement respectif, et par rapport au corps de raccord, par coopération mécanique du patin de serrage avec une portion conique du corps de raccord, centrée sur l'axe longitudinal et tournée suivant une direction arrière, ledit déplacement en translation radiale s'effectuant d'une position radiale initiale du patin de serrage, en configuration désaccouplée de l'élément de raccord, à une position radiale de serrage du patin de serrage, décalée le long de l'axe longitudinal suivant la direction arrière par rapport à la position radiale initiale, chaque patin de serrage comprenant une surface de coopération formée radialement à l'opposé de la portion conique et configurée pour coopérer mécaniquement avec l'interface du terminal et ainsi empêcher un retrait du terminal par rapport au corps de raccord lorsque le patin de serrage est en position radiale de serrage,
- un premier organe de rappel élastique, rappelant le corps de douille dans la direction avant, le corps de douille étant en butée suivant la direction avant contre les patins de serrage lorsque les patins de serrage sont dans la position radiale de serrage,
- des moyens de transmission, interposés entre le clapet et un élément d'entraînement, parmi le corps de douille et au moins l'un des patins de serrage, l'élément d'entraînement étant apte à entraîner le clapet par l'intermédiaire des moyens de transmission, de la position avant à une position arrière, où le clapet ouvre le conduit interne, lorsque les patins de serrage se déplacent de la position radiale initiale à la position radiale de serrage, et
- au moins une lumière, ménagée à travers le corps de raccord, reliant le conduit interne à un volume entourant la première surface radiale du corps de raccord, les moyens de transmission s'étendant à travers la ou les lumières lorsque le clapet est en position arrière.

Une idée à la base de l'invention est de prévoir que le clapet soit actionné par l'élément d'entraînement, à savoir le corps de douille ou au moins l'un des patins de serrage, via les moyens de transmission, plutôt que directement par une bague d'appui ou par une paroi avant interne du terminal lui-même, comme cela a pu être prévu dans l'art antérieur. Comparativement à l'art antérieur, il n'est donc pas obligatoire de prévoir que l'élément de raccord et le terminal présentent des surfaces qui entrent en appui axial à l'accouplement spécifiquement pour actionner le clapet. L'absence de telles surfaces peut permettre de réduire l'encombrement, notamment radial, à la fois de l'élément de raccord et des terminaux compatibles avec l'élément de raccord. Autrement dit, à encombrement radial égal, on peut avantageusement obtenir une plus forte section de passage pour le fluide ou prévoir d'autres fonctions au sein du raccord.

Grâce à l'invention, puisque, durant l'utilisation de l'élément de raccord, la position axiale du corps de douille et des patins par rapport au corps de raccord en position de serrage dépend uniquement du diamètre de l'interface, la position du clapet en configuration accouplée ne dépend que du diamètre de l'interface et la profondeur d'engagement de l'interface sur les patins n'entre pas en ligne de compte dans la position axiale du clapet en configuration accouplée, ce qui permet de limiter la surcourse du clapet dans le corps en cours d'accouplement. Ces avantages ne sont pas obtenus dans l'art antérieur, notamment lorsque l'art antérieur prévoit que l'ouverture du clapet est commandée par le déplacement d'une bague d'appui dont la position axiale par rapport au corps de raccord dépend à la fois du diamètre de l'interface et de la profondeur d'engagement de l'interface sur les patins.

De préférence, les moyens de transmission sont aptes à traverser longitudinalement la ou les lumières depuis le volume entourant la première surface radiale du corps de raccord jusque dans le conduit interne.

De préférence, suivant l'axe longitudinal, la ou chaque lumière a une longueur qui est strictement inférieure à une course maximale parcourue par le clapet, lorsque le corps de douille est déplacé longitudinalement de sa position en configuration désaccouplée de l'élément de raccord à une position de butée arrière contre le corps de raccord.

De préférence, les moyens de transmission sont formés par l'un parmi le clapet ou l'élément d'entraînement et forment une première surface apte à venir en appui selon l'axe longitudinal sur une deuxième surface, appartenant à l'autre parmi l'élément d'entraînement ou le clapet.

De préférence, les moyens de transmission comprennent au moins une patte longitudinale et la lumière est délimitée par des surfaces de guidage du corps de raccord en regard, dans une direction circonférentielle à l'axe longitudinal, la patte longitudinale étant apte à venir au contact de chacune des surfaces de guidage.

De préférence, la ou chaque patte longitudinale est formée par le clapet ; la première surface est formée à une extrémité avant du clapet ; et la deuxième surface est formée à une extrémité arrière du corps de douille.

De préférence, les moyens de transmission sont formés par une bague de transmission, distincte du corps de douille, des patins de serrage et du clapet, la bague de transmission ayant une surface avant apte à venir au contact d'une surface arrière du corps de douille ou des patins de serrage et ayant une surface arrière apte à venir au contact d'une surface avant du clapet.

De préférence, lorsque l'élément de raccord est en configuration désaccouplée, les moyens de transmission sont débrayés longitudinalement de l'élément d'entraînement et/ou du clapet.

De préférence, dans toute configuration de l'élément de raccord : les moyens de transmission sont solidaires de l'élément d'entraînement et du clapet parallèlement à l'axe longitudinal; et outre le rappel du corps de douille dans la direction avant, le premier organe de rappel élastique rappelle le clapet vers la position avant.

De préférence, l'élément de raccord est configuré pour que le raccordement fluidique s'effectue avec le terminal dont l'interface est à enveloppe cylindrique interne et la portion conique est formée par la première surface radiale du corps de raccord.

De préférence, l'élément de raccord comprend : une bague d'appui qui, lorsque l'élément de raccord est en configuration désaccouplée, est montée autour du corps de douille et des patins de serrage, et un deuxième organe de rappel élastique repoussant la bague d'appui dans la direction avant. De préférence, le volume entourant la première surface radiale du corps de raccord est délimité radialement sur l'extérieur par la bague d'appui et communique fluidiquement avec le conduit interne à travers la ou les lumières; et une extrémité avant de la bague d'appui a un joint frontal pour un contact étanche avec le terminal, alors que la bague d'appui est en étanchéité radiale avec le corps de raccord à l'arrière du volume délimité radialement par la bague d'appui et la première surface radiale du corps de raccord.

De préférence, chaque patin de serrage a une face avant, qui délimite la surface de coopération dans la direction avant. De préférence, en configuration désaccouplée, les patins de serrage sont en butée radiale contre une surface de butée du corps de douille ; et une partie de la face avant de chaque patin de serrage émerge d'une surface du corps de douille opposée à la surface de butée et disposée à l'avant des patins de serrage, chaque face avant faisant axialement face à une embouchure de l'élément de raccord.

De préférence, le premier organe de rappel élastique est disposé radialement sur l'extérieur par rapport aux moyens de transmission.

De préférence, le clapet comprend :
- une portion centrale pleine, délimitant, avec le corps de raccord, un passage pour le fluide dans le conduit interne, le passage étant réduit lorsque le clapet est en position avant, par rapport à la position arrière, le clapet en position avant étant de préférence en appui contre le corps de raccord par l'intermédiaire d'un joint d'étanchéité pour fermer le conduit interne de manière étanche ;
- une jupe arrière ; et
- une jupe avant, la jupe arrière et la jupe avant étant disposées de part et d'autre de la portion centrale pleine selon l'axe longitudinal et coopérant mécaniquement à jeu radial réduit avec une deuxième surface radiale interne du corps de raccord, pour le guidage radial du mouvement du clapet entre la position avant et la position arrière, la deuxième surface radiale interne délimitant le conduit interne.

De préférence, chaque logement du corps de douille recevant l'un des patins de serrage est délimité longitudinalement par deux parois axiales parallèles en regard et circonférentiellement par deux parois orthoradiales parallèles en regard, les parois axiales et orthoradiales étant aptes à venir au contact du patin de serrage pour guider le déplacement radial du patin de serrage par rapport au corps de douille.

L'invention sera mieux comprise et d'autres avantages de celle-ci apparaîtront à la lumière de la description suivante, exposant des exemples conformes à son principe, en référence aux dessins annexés suivants.
La figure 1 est une coupe longitudinale d'un élément de raccord selon un premier mode de réalisation de l'invention, montré dans une configuration désaccouplée avec un terminal.
La figure 2 est une vue en perspective éclatée de l'élément de raccord de la figure 1.
La figure 3 est une coupe similaire à celle de la figure 1, où l'élément de raccord est dans une configuration de retrait.
La figure 4 est une coupe transversale de l'élément de raccord suivant le plan de coupe IV-IV de la figure 3.
La figure 5 est une coupe similaire à celle des figures 1 et 3, où l'élément de raccord est montré dans une configuration accouplée, lorsque l'élément de raccord est accouplé avec un autre terminal.
La figure 6 est une coupe transversale de l'élément de raccord suivant le plan VI-VI de la figure 5.
La figure 7 est une coupe similaire à celle de la figure 5, avec encore un autre terminal.
La figure 8 est une coupe longitudinale d'un élément de raccord selon un deuxième mode de réalisation de l'invention, montré dans une configuration désaccouplée avec un terminal.
La figure 9 est une vue en perspective éclatée de l'élément de raccord de la figure 7.
La figure 10 une coupe similaire à celle de la figure 8, où l'élément de raccord est montré dans une configuration accouplée, lorsque l'élément de raccord est accouplé avec le terminal.
La figure 11 est une coupe longitudinale d'un élément de raccord selon un troisième mode de réalisation de l'invention, montré dans une configuration désaccouplée avec un terminal.
La figure 12 est une vue en perspective éclatée de l'élément de raccord de la figure 11.
La figure 13 une coupe similaire à celle de la figure 11, où l'élément de raccord est montré dans une configuration accouplée, lorsque l'élément de raccord est accouplé avec le terminal.
La figure 14 est une coupe longitudinale d'un élément de raccord selon un quatrième mode de réalisation de l'invention, montré dans une configuration désaccouplée avec un terminal.
La figure 15 une coupe similaire à celle de la figure 14, où l'élément de raccord est montré dans une configuration accouplée, lorsque l'élément de raccord est accouplé avec le terminal.

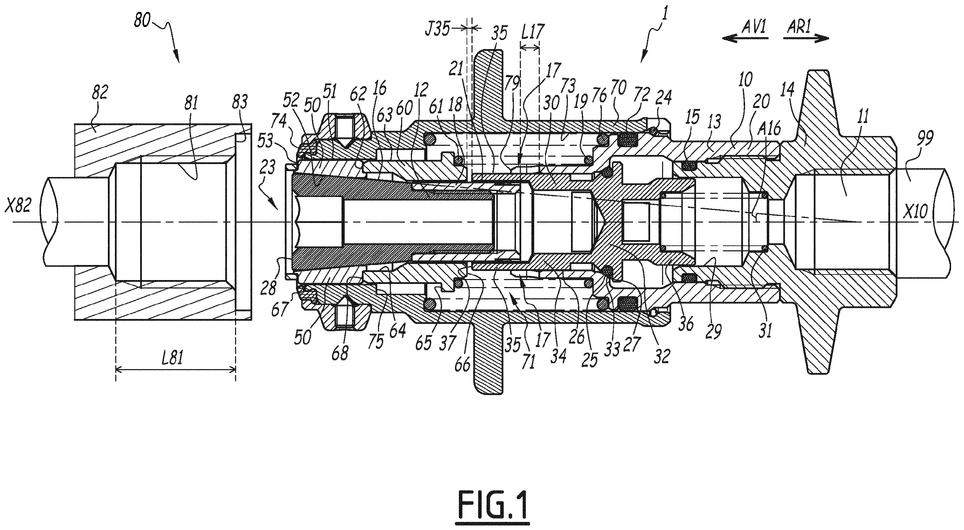

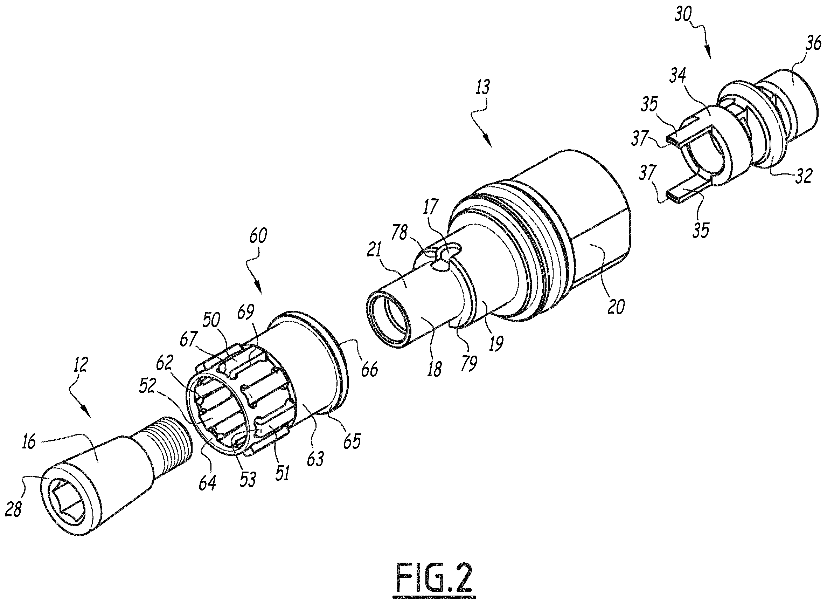

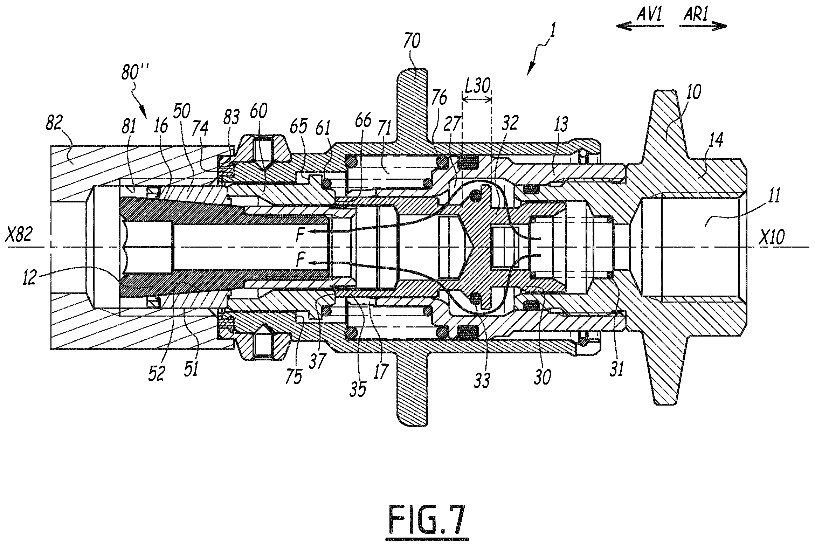

Les figures 1 à 7 montrent un élément de raccord 1 selon un mode de réalisation. L'élément de raccord 1 est apte à conduire du fluide F, dont le trajet est symbolisé par des flèches sur la figure 7. L'élément de raccord 1 comprend un corps de raccord 10, un clapet 30, des patins de serrage 50, un corps de douille 60 et une bague d'appui 70. Pour le présent mode de réalisation, le clapet 30 et le corps de douille 60 sont distincts.

L'élément de raccord 1 est conçu pour être accouplé avec un terminal de manière amovible, tels que des terminaux 80, 80' et 80" montrés respectivement aux figures 1, 5 et 7, afin de raccorder une conduite de fluide 99 au terminal accouplé.

On définit un axe d'emmanchement, ou axe longitudinal X10, qui est fixe par rapport au corps de raccord 10. Dans ce qui suit, les expressions telles que « axial », « longitudinal » et « radial », « circonférentiel » sont définies par rapport à l'axe X10, sauf mention du contraire. On définit une direction avant AV1, parallèle à l'axe X10, qui est dirigée en allant de l'élément de raccord 1 vers le terminal à accoupler. On définit une direction arrière AR1, en sens inverse. L'expression « avant », lorsqu'elle concerne l'élément de raccord 1, est dirigée suivant la direction AV1. L'expression « arrière », lorsqu'elle concerne l'élément de raccord 1, est dirigée suivant la direction AR1.

On définit une direction radiale comme étant une direction orthogonale et sécante, c'est-à-dire perpendiculaire, à un axe longitudinal, ici l'axe longitudinal X10. Une face radiale est une face qui s'étend autour de l'axe longitudinal. Pour un élément donné, le terme « interne » signifie « tourné vers l'axe longitudinal, selon la direction radiale de cet élément », alors que le terme « externe » signifie « tourné dans la direction opposée à l'axe longitudinal, selon la direction radiale de cet élément ».

On définit une direction circonférentielle à un axe longitudinal comme étant une direction circulaire autour de l'axe longitudinal et centrée sur l'axe longitudinal. En d'autres termes, lorsqu'un élément est en rotation autour d'un axe longitudinal, un point en mouvement de cet élément se déplace selon une direction circonférentielle. Il existe donc deux directions circonférentielles par rapport à un axe longitudinal, correspondant aux deux sens de rotation autour de cet axe longitudinal.

Le corps de raccord 10 est relié à la conduite de fluide 99. Le corps 10 délimite un conduit interne 11 pour le fluide, qui s'étend coaxialement avec l'axe X10. Plus généralement, le corps 10 est centré sur l'axe X10 et s'étend selon l'axe X10. Le corps 10 présente une forme de révolution autour de l'axe X10.

Les terminaux 80, 80' et 80" sont identiques, hormis pour leur diamètre d'interface mentionné ci-après et éventuellement pour leur longueur d'interface. Dès lors, toute caractéristique indiquée pour l'un des terminaux 80, 80' et 80" s'applique aux autres, sauf mention du contraire. Le terminal 80 comprend un corps de terminal 82, qui est tubulaire, pour conduire la circulation de fluide F. On définit un axe central X82, avec lequel le corps 82 est coaxial et qui est fixe par rapport au corps 82. Le corps 82 forme une interface 81. Dans le présent exemple, cette interface 81 est interne, en étant formée sur l'intérieur du corps 82. L'interface 81 est à enveloppe cylindrique centrée sur l'axe X82. L'interface 81 débouche sur une face avant 83 du terminal 80. Lorsque le terminal 80 et l'élément de raccord 1 sont accouplés, l'interface 81 est avantageusement coaxiale avec l'axe X10.

Les expressions telles que « axial », « longitudinal » et « radial » peuvent aussi définies par rapport à l'axe X82 lorsqu'elles concernent le terminal 80, sauf mention du contraire. L'expression « avant », lorsqu'elle concerne le terminal 80, est dirigée en sens inverse de la direction AV1. L'expression « arrière », lorsqu'elle concerne le terminal 80, est dans le même sens que la direction AV1 de l'élément 1.

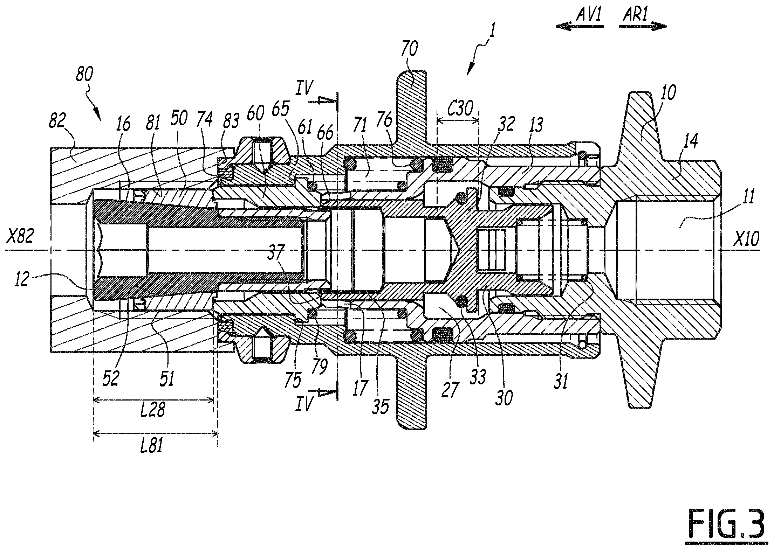

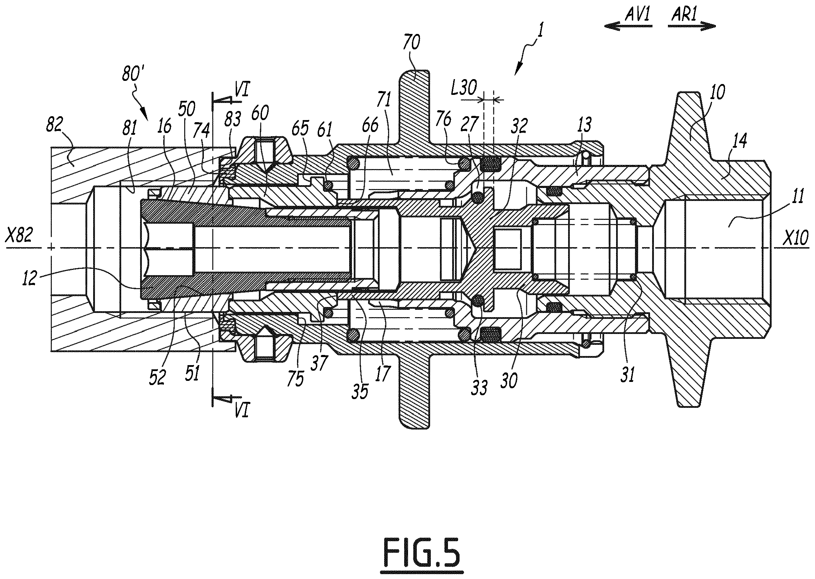

L'interface 81 s'étend sur une longueur d'interface L81, mesurée longitudinalement. D'un terminal 80, 80', 80" à l'autre, le diamètre de l'interface 81, dit « diamètre d'interface », diffère. Le diamètre d'interface du terminal 80' de la figure 5 a une valeur minimale. Le diamètre d'interface du terminal 80" de la figure 7 a une valeur maximale. Le diamètre d'interface du terminal 80 des figures 1 et 3 a une valeur intermédiaire entre les valeurs minimale et maximale. En dépit de ce diamètre différent, les terminaux 80, 80' et 80" peuvent tous être accouplés avec l'élément de raccord 1. Le diamètre d'interface du terminal 80" est le maximum admissible pour l'élément de raccord 1 du présent exemple. Le diamètre d'interface du terminal 80' est le minimum admissible pour l'élément de raccord 1 du présent exemple. Dans ce qui suit, on désigne tout terminal, quel que soit son diamètre d'interface, par la référence 80, sauf mention spécifique.

Le long de l'axe X10, le corps de raccord 10 comprend ici une partie avant 12, une partie intermédiaire 13 et une partie arrière 14 assemblées. Par exemple, la partie intermédiaire 13 et la partie arrière 14 sont vissées l'une avec l'autre, avec interposition d'un joint d'étanchéité 15. Par exemple, la partie avant 12 est vissée dans la partie intermédiaire 13. En variante, les parties 12 et 13, ou les parties 12 et 14, ou les parties 13 et 14, ou les parties 12, 13 et 14, pourraient être assemblées différemment ou formées par une seule pièce monobloc.

Le corps de raccord 10 est raccordé à la conduite 99 par l'intermédiaire de la partie arrière 14, la conduite 99 étant ici reçue coaxialement avec l'axe X10 à l'intérieur de la partie arrière 14, par exemple en y étant fixée par vissage, de sorte à déboucher dans le conduit interne 11.

Le corps de raccord 10 comprend une portion avant conique 16, ici formée par la surface radiale externe de la partie avant 12. La portion conique 16 est disposée dans la direction avant AV1 par rapport à la portion intermédiaire 13. La portion conique 16 est centrée sur l'axe d'emmanchement X10 et tournée vers l'extérieur. Dans ce mode de réalisation, la portion conique 16 diverge suivant la direction avant AV1, c'est-à-dire va en s'écartant de l'axe X10 suivant la direction avant AV1. La portion conique 16 est tournée suivant la direction arrière AR1. Par exemple, la portion conique 16 définit demi-angle d'ouverture A16 mesurant entre 3 et 10 degrés, de préférence 5 degrés. Le demi-angle A16 est l'angle que fait la portion conique 16 par rapport à l'axe X10. Ce demi-angle A16 est constant sur toute la longueur de la portion conique 16.

La partie intermédiaire 13 comprend, successivement en sens opposé de la direction AV1, des portions 18, 19 et 20 de diamètre différent. La partie intermédiaire 13 est reliée à la partie avant 12 via la portion 18, ici par vissage. La partie intermédiaire 13 est reliée à la partie arrière 14 via la portion 20, ici par vissage. La portion 18 présente ici un plus petit diamètre interne que la portion 19 et la portion 19 un plus petit diamètre interne que la portion 20. La portion 18 présente ici un plus petit diamètre externe que la portion 19 et la portion 19 un plus petit diamètre externe que la portion 20.

A une jonction entre les portions 18 et 19, la partie intermédiaire 13 est percée de deux lumières 17, c'est-à-dire deux ouvertures.

Le corps de douille 60 est monté autour du conduit interne 11, autour d'une surface radiale externe 21 du corps du raccord 10, au moins partiellement autour de la portion conique 16. La surface radiale externe 21 est délimitée par les surfaces radiales externes de la partie intermédiaire 13 et de la partie avant 12. Le corps de douille 60 est disposé dans un volume intérieur 71. Le volume intérieur 71 est, délimité radialement vers l'intérieur, par le corps de raccord 10, en particulier sa surface radiale externe 21 et sa portion conique 16, et, radialement vers l'extérieur, par la bague d'appui 70. Le corps de douille 60 est mobile en translation par rapport au corps 10, suivant l'axe X10, à l'intérieur du volume intérieur 71. La surface radiale externe 21 guide radialement le corps de douille 60 lors de son déplacement longitudinal par rapport au corps 10. Plus généralement, les lumières 17 sont ménagées à travers le corps de raccord 10 de façon à déboucher dans le conduit interne 11 et dans le volume intérieur 71. En d'autres termes, chaque lumière 17 relie le volume intérieur 71 et le conduit interne 11. L'élément de raccord 1 comprend un premier ressort 61, qui constitue un organe de rappel élastique et qui applique un effort élastique rappelant le corps de douille 60 suivant la direction avant AV1. A cette fin, le premier ressort 61 est avantageusement un ressort de compression, qui est interposé longitudinalement entre le corps de raccord 10, par exemple la partie intermédiaire 13, et le corps de douille 60.

Le corps de douille 60 délimite des logements 62. On prévoit autant de logements 62 que de patins de serrage 50, ici huit logements 62 et huit patins de serrage 50. Chaque logement 62 reçoit l'un des patins de serrage 50. Chaque logement 62 présente une section rectangulaire. Chaque logement 62 traverse radialement le corps de douille 60. Chaque logement 62 débouche, vers l'intérieur, à hauteur de la portion conique 16. Les patins 50, et donc leurs logements 62, sont régulièrement répartis autour de l'axe X10.

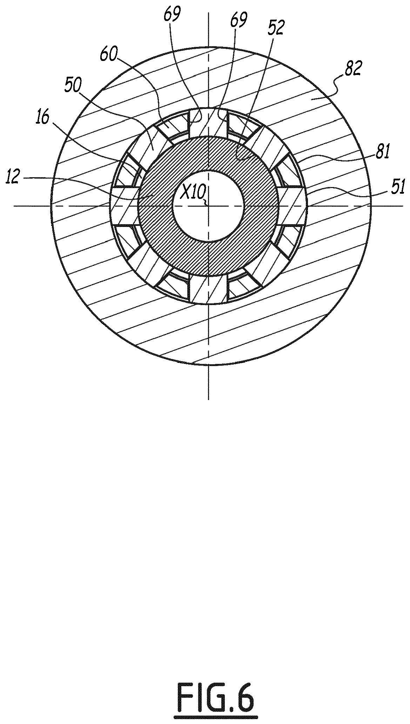

Les patins 50 étant reçus dans leur logement 62 respectif, ils sont solidairement mobile avec le corps de douille 60, pour la translation suivant l'axe X10 par rapport au corps 10. En revanche, les patins de serrage 50 sont mobiles par rapport au corps de douille 60, dans leur logement 62 respectif, radialement par rapport à l'axe X10. Pour chaque logement 62, le corps de douille 60 comprend deux parois orthoradiales 69 parallèles, visibles notamment sur la figure 6, qui délimitent circonférentiellement le logement 62 et deux parois axiales 67 et 68 parallèles, qui délimitent longitudinalement le logement 62. Ces parois 67, 68 et 69 guident le déplacement radial des patins 50 par rapport au corps de douille 60. Chacune des parois axiales 67 et 68 est apte à venir au contact des patins 50 parallèlement à l'axe X10, pour que la position axiale des patins 50 corresponde à la position axiale du corps de douille 60. Chacune des parois orthoradiales 69 est apte à venir au contact des patins 50 pour guider le mouvement radial des patins 50.

Chaque patin de serrage 50 est en contact avec la portion conique 16. En fonction de la position des patins 50 par rapport au corps 10 suivant l'axe X10, le déplacement radial des patins 50 est borné par la portion conique 16, qui impose aux patins 50 un déplacement radial vers l'extérieur au fur et à mesure que les patins 50 sont déplacés axialement suivant la direction avant AV1. Autrement dit, les patins 50 sont déplacés en translation radiale par rapport au corps de douille 60 par coopération mécanique des patins 50 avec la portion conique 16. Ainsi les patins de serrage 50 sont animés d'un mouvement longitudinal et d'un mouvement radial au contact de la portion conique 16 entre une position initiale, ou position de butée, en configuration désaccouplée de l'élément de raccord et une position de retrait puis entre la position de retrait et une position de serrage.

En particulier, les patins de serrage 50 sont mobiles par rapport au corps de douille 60 entre des positions radiales internes de retrait, dont une est montrée sur la figure 3, et des positions radiales externes de serrage, dont deux sont montrées sur les figures 5 et 7, et qui dépendent du diamètre d'interface du terminal 80 qui est accouplé avec l'élément de raccord 1. Lorsque les patins 50 sont en position radiale de retrait, l'élément de raccord 1 est dans une configuration de retrait. Lorsque les patins 50 sont dans l'une des positions radiales de serrage et coopèrent avec le terminal 80, l'élément de raccord 1 est en configuration accouplée. De leur position radiale de retrait à leur position radiale de serrage, les patins 50 coopèrent avec le corps de raccord 10 par contact avec la portion conique 16.

Pour coopérer mécaniquement avec la portion conique 16, chaque patin de serrage 50 comprend un talon interne 52, avec une surface interne conique de forme complémentaire à la portion conique 16 du corps de raccord 10. Le talon interne 52 est disposé radialement vers l'intérieur par rapport au corps de douille 60. En particulier, le talon interne 52 est disposé dans un logement, délimité par le corps de douille 60 et au sein duquel s'étend la portion conique 16, le corps de douille 60 étant annulaire. De préférence, la dimension longitudinale du talon interne 52 est plus longue que la dimension longitudinale du logement 62 recevant le patin 50, si bien que le talon interne 52 coopère avec une surface de butée interne 64 du corps de douille 60, la surface de butée interne 64 délimitant le logement du corps de douille 60 et faisant face radialement à la portion conique 16. Coopérant ainsi, le talon interne 52 et la surface de butée interne 64 forment une butée au déplacement radial vers l'extérieur du patin 50 dans son logement 62. Le patin 50 arrive ainsi en butée lorsqu'il atteint une position radiale externe dite « position radiale initiale » ou « position radiale de butée », adoptée pour une configuration désaccouplée de l'élément de raccord 1, montrée sur la figure 1.

Le corps de douille 60 a une surface radiale externe 63 qui est radialement tournée à l'opposé de la surface de butée interne 64. Les logements 62 traversent radialement le corps de douille 60 de la surface radiale externe 63 à la surface radiale interne 64. En avant des patins 50, la surface radiale externe 63 a un diamètre inférieur au diamètre de l'interface 81 interne appartenant au terminal 80. Chaque patin de serrage 50 présente une surface externe 51 à enveloppe cylindrique, visible notamment sur les figures 1, 3, 5 et 6. Chaque surface externe 51 est orientée dans une direction radiale opposée au talon interne 52, et donc à la portion conique 16. Par l'intermédiaire de cette surface 51, le patin de serrage 50 est conçu pour coopérer mécaniquement avec l'interface 81 interne, qui présente une enveloppe cylindrique complémentaire de la surface externe 51. L'interface 81 et/ou la surface externe 51 peuvent porter un filetage respectif complémentaire l'un avec l'autre. L'interface 81 et/ou la surface externe 51 peuvent présenter un traitement de surface, obtenu par exemple par rainurage laser, augmentant ainsi leur coefficient de frottement mutuel.

Comme montré sur la figure 1, en configuration désaccouplée, les patins 50 émergent du corps de douille 60 radialement vers l'extérieur. En particulier, chaque patin 50 présente une face avant 53, c'est-à-dire tournée dans la direction avant AV1, et dont une partie émerge radialement du corps de douille 60, dans cette configuration désaccouplée. En particulier, une partie de la face avant 53 émerge radialement de la surface externe 63 du corps de douille 60 disposée en avant des patins 50. Alors, la partie émergente de la face avant 53 de chaque patin 50 fait face à une embouchure 23 de l'élément de raccord, parallèlement à l'axe X10. Dit encore autrement, la partie émergente de chaque face avant 53 est tournée suivant la direction AV1, sans qu'aucune partie de l'élément de raccord 1 ne soit interposée entre cette partie émergente et l'avant de l'élément de raccord 1, jusqu'à l'embouchure 23. L'embouchure 23 est définie à une extrémité longitudinale de l'élément de raccord 1 qui est opposée à une autre extrémité longitudinale recevant la conduite 99. Pour chaque patin 50, la face avant 53 délimite la surface externe 51 dans la direction avant AV1. En particulier, en configuration désaccouplée, les surfaces externes 51 à enveloppe cylindrique des patins 50 délimitent ensemble autour des patins 50 un cylindre virtuel, dont le diamètre est supérieur au diamètre de la surface externe 63 du corps de douille 60, en avant des patins 50. Le diamètre du cylindre virtuel est alors également supérieur au diamètre d'interface maximum de l'interface interne 81.

En configuration désaccouplée, le corps de douille 60 dépasse avantageusement vers l'avant du corps 10. En cours d'accouplement et de désaccouplement, le déplacement du corps de douille 60 suivant la direction arrière AR1 est borné par le corps de raccord 10. A cet effet, comme montré sur la figure 3, le corps de douille 60 arrive par exemple en butée suivant la direction arrière AR1 contre une surface avant 79 du corps 10, située longitudinalement à hauteur des lumières 17, ici à la jonction entre les portions 18 et 19. Ici, cette mise en butée est effectuée par l'intermédiaire d'une surface arrière 66 appartenant au corps de douille 60.

Les lumières 17 font communiquer radialement le conduit interne 11 et le volume intérieur 71 disposé radialement entre le corps de raccord 10 et la bague d'appui et dans lequel est logé au moins la partie arrière du corps de douille 60. Les lumières 17 font communiquer dans la direction longitudinale le conduit interne 11 et le volume intérieur 71.

De manière générale, comme montré sur la figure 3, une longueur maximale de prise L28, mesurée entre une face avant 28 de la partie avant 12 du corps 10 et une extrémité arrière de la surface externe 51 à enveloppe cylindrique des patins 50, lorsque le corps de douille 60 est en butée arrière contre le corps de raccord 10, ce qui arrive lorsque l'élément de raccord 1 est en configuration de retrait, est compatible avec les dimensions internes du terminal, et en particulier de l'interface 81. La face avant 28 est formée en particulier à l'avant de la portion conique 16.

La bague d'appui 70 est une bague externe qui entoure le corps de douille 60, les patins 50 et le corps de raccord 10. La bague d'appui 70 est mobile en translation par rapport au corps de raccord 10 et par rapport au corps de douille 60 suivant l'axe d'emmanchement X10. Un joint d'étanchéité 72 est interposé entre une surface externe du corps de raccord 10, ici à l'avant de la portion 20 de la partie intermédiaire 13, et une face radiale interne 73 de la bague d'appui 70. Le joint 72 est interposé entre le corps 10 et la bague 70 dans toutes les positions longitudinales prises par la bague d'appui 70 par rapport au corps 10 en cours d'accouplement et de désaccouplement. Autrement dit, la bague d'appui 70 est en étanchéité radiale avec le corps 10. A une extrémité avant de la bague d'appui 70 est logé un joint frontal 74.

La bague d'appui 70 comprend une surface interne arrière 75 et le corps de douille 60 comprend une surface avant 65, formée sur un épaulement externe du corps de douille 60. Comme montré sur la figure 3, la surface interne arrière 75 est apte à coopérer mécaniquement avec la surface avant 65 pour entraîner le corps de douille 60 suivant la direction arrière AR1, vers sa position axiale de retrait, et donc pour entrainer les patins 50 suivant la direction arrière AR1, de manière que les patins 50 adoptent leur position radiale interne de retrait par coopération avec la portion conique 16, la position radiale interne de retrait correspondant à la position axiale de retrait du corps de douille 60 et des patins 50.

L'élément de raccord 1 comprend un deuxième ressort 76, qui applique un effort de rappel élastique sur la bague d'appui 70 suivant la direction avant AV1 pour ramener la bague 70 suivant la direction avant AV1. Par exemple, le ressort 76 est un ressort de compression, qui est interposé longitudinalement entre le corps de raccord 10 et la bague d'appui 70. De préférence, le ressort 76 est disposé à l'intérieur de la bague 70 autour du premier ressort 61. Le corps de raccord 10, par exemple la partie intermédiaire 13, forme une butée 24 au déplacement de la bague d'appui 70 suivant la direction avant AV1, lorsque l'élément de raccord 1 est en configuration désaccouplée comme montré sur la figure 1.

Le clapet 30 est monté mobile longitudinalement, par rapport au corps de raccord 10, entre une position avant de fermeture, montrée sur la figure 1 et adoptée en configuration désaccouplée de l'élément de raccord, et des positions arrières d'ouverture, montrées sur les figures 3, 5 et 7 et adoptées notamment en configuration accouplée de l'élément de raccord 1. Le clapet 30 est reçu dans le conduit interne 11. L'élément de raccord 1 comprend un troisième ressort 31, qui rappelle le clapet 30 suivant la direction avant AV1. Par exemple le troisième ressort 31 est un ressort de compression, qui est interposé axialement entre le clapet 30 et le corps 10, en particulier la partie arrière 14.

Le clapet 30 comprend une portion centrale pleine 32. La portion centrale pleine 32 délimite, avec le conduit interne 11, un passage 27 pour le fluide F. En position avant de fermeture du clapet 30, le passage 27 est minimal et plus réduit qu'en position arrière d'ouverture du clapet 30 en configuration accouplée. Pour ce mode de réalisation, en position avant de fermeture du clapet 30, le clapet 30 vient en appui sur un siège 25 formé par le corps de raccord 10, en arrière des lumières 17. Cette mise en appui ferme le passage 27. Ici le siège 25 est formé à une jonction entre la portion 19 et la portion 20 de la partie intermédiaire 13. Cette mise en appui du clapet 30 contre le corps de raccord 10 s'effectue par l'intermédiaire d'un joint d'étanchéité 33 entre le clapet 30 et le corps 10, pour que la fermeture du passage 27 et donc du conduit interne 11 soit étanche. De préférence, le joint d'étanchéité 33 est porté par le clapet 30, en étant logé dans la portion centrale pleine 32, et vient en appui contre le siège 25. En position d'ouverture du clapet 30, comme montré sur les figures 5 et 7, le fluide F peut transiter dans le conduit interne 11 autour de la portion pleine 32 du clapet 30.

Le clapet 30 comprend une jupe avant 34. La jupe avant 34 s'étend suivant la direction avant AV1 à partir de la portion centrale pleine 32. Le clapet 30 comprend une jupe arrière 36 s'étend suivant la direction arrière AR1 à partir de la portion centrale pleine 32. Le déplacement du clapet 30 par rapport au corps 10 est assuré par coulissement du clapet 30 au sein du corps 10. Dans l'exemple, de la position d'ouverture à la position de fermeture du clapet 30, une surface radiale externe de la jupe avant 34 coopère à jeu radial réduit avec une surface interne cylindrique 26 du corps de raccord et une surface radiale externe de la jupe arrière 36 coopère à jeu radial réduit avec une surface interne cylindrique 29 du corps de raccord 10 pour le guidage radial du clapet 30 dans son mouvement longitudinal entre la position avant et la position arrière. Les surfaces radiales internes 26 et 29 sont avantageusement centrées sur l'axe X10. La surface radiale interne 26 est avantageusement formée par la portion 19 de la partie 13. La surface radiale interne 29 est avantageusement formée par la partie arrière 14.

Le troisième ressort 31 est interposé entre une surface arrière de la jupe arrière 36 du clapet 30 et une surface avant de la partie arrière 14 du corps de raccord 10, ici disposée dans le conduit interne 11.

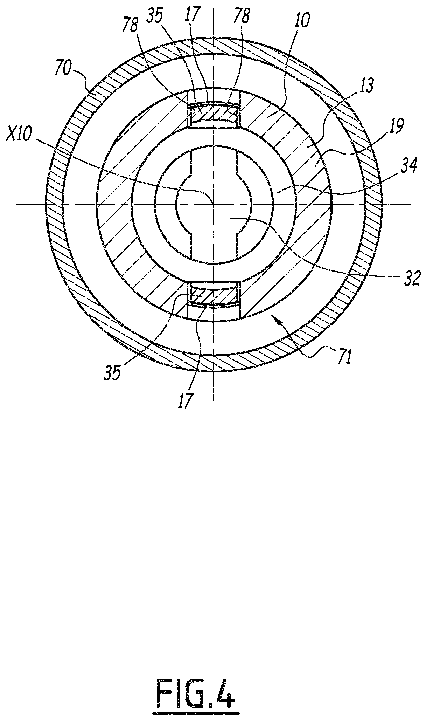

Suivant la direction avant AV1, la jupe avant 34 se prolonge en deux pattes longitudinales 35, qui s'étendent parallèlement à l'axe X10 vers l'avant, qui sont réparties à 180° l'une de l'autre autour de l'axe X10 et qui forment une extrémité avant du clapet 30. Les pattes longitudinales 35 sont engagées dans les lumières 17 du corps de raccord 10, au moins lorsque l'élément de raccord 1 est en configuration accouplée. Les pattes 35 s'étendent donc partiellement dans le volume intérieur 71. Les pattes 35 traversent longitudinalement les lumières 17 depuis le volume intérieur 71 jusque dans le conduit interne 11, où les pattes sont rattachées à la jupe avant 34. Les dimensions circonférentielles des lumières 17 du corps de raccord 10 correspondent aux dimensions circonférentielles des pattes longitudinales 35. Ainsi, le mouvement longitudinal de chaque patte 35 entre la configuration désaccouplée et la configuration accouplée est guidé par des surfaces de guidage 78 en regard, ici orthoradiales et parallèles, visibles sur la figure 4 et aptes à venir au contact de la patte 35. Ces surfaces de guidage 78 appartiennent au corps de raccord 10 et délimitent circonférentiellement la lumière 17, dans laquelle la patte 35 est engagée.

Les pattes longitudinales 35 ont chacune une surface d'extrémité avant 37 respective. Les surfaces d'extrémité avant 37 sont dirigées suivant la direction avant AV1, en regard de la surface arrière 66 appartenant au corps de douille 60. Ici la surface arrière 66 forme précisément une extrémité arrière du corps de douille 60. En configuration désaccouplée, le clapet 30 est en position avant de fermeture, en butée avant contre le corps 10 via le joint d'étanchéité 33, et un jeu longitudinal J35 existe entre les surfaces d'extrémité avant 37 des pattes longitudinales 35 et la surface arrière 66 du corps de douille 60. En d'autres termes, les pattes sont débrayées longitudinalement du corps de douille et des patins.

Les pattes longitudinales 35 constituent des moyens de transmission, qui sont interposées entre le clapet 30 et le corps de douille 60. Ici, les moyens de transmission sont directement formés par le clapet 30, à savoir par les pattes 35. Lorsque l'élément de raccord 1 évolue entre la configuration désaccouplée et la configuration accouplée, le corps de douille 60 entraîne le clapet 30 par l'intermédiaire des pattes 35, de la position avant de fermeture à la position arrière d'ouverture, où le clapet 30 ouvre le conduit interne 11.

Un avantage est que la coopération mécanique axiale directe entre le corps de douille 60 et le clapet 30, obtenue lorsque les moyens de transmission sont monoblocs soit avec le corps de douille 60, soit avec le clapet 30 comme c'est le cas ici, permet de réduire le nombre de pièces de l'élément de raccord 1. En effet, il n'est avantageusement pas nécessaire de prévoir des pièces supplémentaires pour spécifiquement constituer les moyens de transmission.

Par ailleurs, la géométrie longitudinale des moyens de transmission, ici sous la forme des pattes longitudinales 35, réduit les dimensions longitudinales des lumières 17 pratiquées dans le corps de raccord 10. En effet, les dimensions longitudinales ne dépendent pas de la course et du déplacement du clapet 30 par rapport au corps de raccord 10. On obtient alors une meilleure résistance mécanique du corps de raccord 10.

De préférence, le premier ressort 61 est disposé radialement autour des pattes longitudinales 35 du clapet 30 et autour de la partie intermédiaire 13 du corps de raccord 10. De préférence le premier ressort 61 entoure l'extrémité arrière du corps de douille 60. Ainsi le premier ressort 61 est radialement guidé par le corps de douille 60 et par la partie intermédiaire 13.

Pendant une première phase d'accouplement, on dispose le terminal 80 et l'élément de raccord 1 pour aligner les axes X10 et X82. A ce moment-là, l'élément de raccord 1 est en configuration désaccouplée, comme montré sur la figure 1.

On rapproche alors le corps de raccord 10 et le terminal 80 l'un de l'autre selon l'axe d'emmanchement X10. Le terminal 80 s'engage autour du corps de douille 60 et sa face avant 83 vient au contact du joint frontal 74 de la bague d'appui 70. Le joint frontal 74 assure alors avec le joint radial 72 une étanchéité fluidique entre l'intérieur et l'extérieur d'un ensemble constitué par l'élément de raccord 1 et le terminal 80. La face avant 83 vient aussi en appui contre la partie émergée de la face avant 53 des patins 50. La poursuite du mouvement d'emmanchement selon l'axe d'emmanchement X10 entraîne les patins 50, donc le corps de douille 60, et la bague d'appui 70 suivant la direction arrière AR1, par rapport au corps 10. Les patins 50 entraînent le corps de douille 60 via la paroi 68. Pendant ce mouvement du corps de douille 60 suivant la direction arrière AR1, les patins 50, sous l'effet du mouvement d'emmanchement du terminal 80 et en coopération avec la portion conique 16, se déplacent radialement vers l'intérieur, vers leur position radiale de retrait, dans leur logement 62 respectif, jusqu'à ce que les patins 50 soient disposés à l'intérieur d'un cylindre virtuel, dont le diamètre est inférieur au diamètre de l'interface interne 81. Le terminal 80 peut alors venir entourer les patins 50, sans frotter, ou en frottant peu, et progresser suivant la direction arrière AR1 par rapport aux patins 50 et au corps de raccord 10, jusqu'à ce que la bague d'appui 70 parvienne en butée contre la surface avant 65 du corps de douille 60. Comme montré sur la figure 3, le mouvement de recul du corps de douille 60 par rapport au corps de raccord 10 est limité par butée arrière du corps de douille 60 contre la partie intermédiaire 13 du corps de raccord 10. Sur la figure 3, l'élément de raccord 1 est dans une configuration de retrait. Dans la configuration de retrait, les patins 50 atteignent leur position radiale de retrait qui est distante radialement de l'interface 81 de manière que l'interface 81 soit dégagée de toute coopération mécanique avec les patins 50.

Lorsqu'on relâche l'effort d'emmanchement, le premier ressort 61 repousse le corps de douille 60 suivant la direction AV1, en butée avant contre les patins 50, via la paroi 68. Ainsi, les patins 50, par coopération mécanique avec la portion conique 16, sont pressés radialement vers l'extérieur au contact de l'interface 81 du terminal 80, qui est radialement en regard de la surface externe 51 des patins 50.

Les patins de serrage 50 coopèrent avec le corps de douille 60 dans leur mouvement radial vers l'extérieur, de la position de retrait à la position de serrage, le premier ressort 61 repoussant le corps de douille 60 en butée avant contre les patins 50 entre la configuration de retrait de l'élément de raccord 1 et la configuration accouplée de l'élément de raccord 1 et en configuration accouplée de l'élément de raccord 1.

En cours d'accouplement, lors du déplacement du corps de douille 60 suivant la direction arrière AR1, après une course morte en début d'accouplement sur la longueur correspondant au jeu longitudinal J35, la surface arrière 66 du corps de douille 60 parvient au contact des pattes longitudinales 35. Les pattes 35 sont donc ensuite embrayées longitudinalement avec le corps de douille 60 et le déplacement suivant la direction arrière AR1 du corps de douille 60 par rapport au corps de raccord 10 s'accompagne d'un déplacement suivant la direction arrière AR1 du clapet 30 par rapport au corps de raccord 10, vers une position d'ouverture du clapet 30. A ce titre, les pattes longitudinales 35 forment les moyens de transmission, qui sont solidaires du clapet 30 et monoblocs avec le clapet 30. Ces moyens de transmission permettent au corps de douille 60 d'entrainer le clapet 30 de sa position avant à sa position arrière, entre la configuration désaccouplée et la configuration accouplée de l'élément de raccord 1. Comme expliqué ci-avant, ces moyens de transmission sont reçus au moins partiellement dans les lumières 17, ce qui permet la transmission du mouvement entre le corps de douille 60, disposé autour du corps 10, au clapet 30, disposé, pour l'essentiel, à l'intérieur du corps 10. Lorsque le corps de douille 60 est rappelé suivant la direction avant AV1 par le premier ressort 61, le clapet 30 suit ce déplacement vers l'avant, repoussé lui-même en butée avant contre la surface arrière 66 du corps de douille 60 par le troisième ressort 31, jusqu'à parvenir en position d'ouverture en cours d'accouplement ou jusqu'à parvenir en position avant de fermeture en cours de désaccouplement.

Comme montré sur la figure 5, en configuration accouplée, le clapet 30 a une position décalée suivant la direction arrière AR1 par rapport à sa position avant de fermeture et le passage 27, qui était minimal entre le corps de raccord 10 et le clapet 30 dans le conduit interne 11 de façon à pouvoir être fermé par le joint 33 en configuration désaccouplée, comme montré sur la figure 1, est augmenté. En configuration accouplée, le volume intérieur 71 communique fluidiquement avec le conduit interne 11 à travers les lumières 17. Le volume intérieur 71 est donc soumis à la pression du fluide F présent dans le conduit interne 11. Puisqu'un diamètre d'étanchéité entre la bague d'appui 70 et le terminal 80, ici au niveau du joint frontal 74, est plus petit qu'un diamètre d'étanchéité entre la face radiale interne 73 de la bague d'appui 70 et le corps de raccord 10, ici au niveau du joint 72, la bague d'appui 70 est repoussée suivant la direction avant AV1 par rapport au corps de raccord 10, contre le terminal 80, ce qui accentue l'étanchéité du joint frontal 74 contre le terminal 80.

En configuration accouplée, les pattes longitudinales 35 sont embrayées longitudinalement avec le corps de douille 60 et avec le clapet 30.

En configuration accouplée où les patins sont en position radiale de serrage, l'interface 81 recouvre au moins partiellement les patins 50 et les patins 50 coopèrent mécaniquement avec l'interface 81 de manière à empêcher le retrait du terminal 80, c'est-à-dire de manière à empêcher l'interface 81 de découvrir complètement les patins 50. Le corps de douille 60 est maintenu en position axiale de serrage, en butée vers l'avant contre les patins 50 via la paroi 68, par le premier ressort 61. Les pattes 35 s'étendent longitudinalement dans les lumières 17 depuis le volume intérieur 71 jusque dans le conduit interne 11.

Pour le désaccouplement, on débute par enfoncer davantage le terminal 80 suivant la direction arrière AR1 de l'élément de raccord 1. Alternativement ou conjointement, on entraîne la bague d'appui 70 suivant la direction arrière AR1 par rapport au corps 10, de manière que la bague d'appui 70 vienne en butée arrière contre le corps de douille 60 et entraîne ainsi le corps de douille 60 en butée arrière contre les patins 50, via la paroi 67. Les patins 50 sont ainsi entraînés suivant la direction arrière AR1 par le corps de douille 60. La bague d'appui 70 forme alors une bague de manoeuvre. Autrement dit, pour le présent mode de réalisation, une même bague 70 forme ici à la fois la bague d'appui et la bague de manoeuvre. En tout cas, lorsque la bague d'appui 70 est en butée arrière contre le corps de douille 60, les patins 50 suivent le mouvement axial de la bague d'appui 70 suivant la direction arrière AR1 du corps de douille 60, et, par coopération mécanique avec la partie conique 16, se déplacent radialement vers l'intérieur vers leur position radiale de retrait, jusqu'à ce que les patins 50 soient disposés à l'intérieur d'un cylindre virtuel, dont le diamètre est inférieur au diamètre d'interface 81. Autrement dit, en position de retrait, les patins 50 sont radialement distants de l'interface 81, alors que l'interface 81 les entoure. L'interface 81 est alors dégagée de toute coopération mécanique avec les patins 50, de sorte que le terminal 80 peut être retiré de l'élément de raccord 1, c'est-à-dire, peut découvrir complètement la surface radiale externe 51 des patins 50.

Pendant le déplacement du corps de douille 60 suivant la direction arrière AR1, le clapet 30, en butée avant contre le corps de douille 60 par l'intermédiaire des pattes longitudinales 35, suit le mouvement longitudinal du corps de douille 60 suivant la direction arrière AR1. Les patins de serrage 50 coopèrent avec le corps de douille 60 dans leur mouvement radial vers l'intérieur, de la position de serrage à la position de retrait, le corps de douille 60 étant alors en butée arrière contre les patins 50.

Alors que le terminal 80 a été retiré et que le technicien relâche la bague d'appui 70, puisque lorsque le corps de douille 60 est rappelé suivant la direction avant AV1 par le premier ressort 61, le clapet 30, soumis au troisième ressort 31, suit le mouvement du corps de douille 60 jusqu'à ce que le clapet 30 parvienne en position de fermeture. Le clapet 30, puisqu'il est rappelé élastiquement vers la position avant de fermeture par le ressort 31, conforte le serrage des patins 50 sur l'interface 81 en configuration accouplée.

De la configuration désaccouplée à la configuration accouplée et/ou de la configuration accouplée à la configuration désaccouplée, le clapet 30 a fait une surcourse suivant la direction arrière AR1 en atteignant la position qui a été prise temporairement lorsque l'élément de raccord 1 est passé par la configuration de retrait, par exemple la configuration de retrait montrée sur la figure 3

Suivant l'axe X10, le clapet 30 parcourt une course C30, dite « course maximale », de la configuration désaccouplée montrée sur la figure 1 à la configuration de retrait avec le corps de douille 60 en butée arrière contre le corps 10 montrée sur la figure 3. Le clapet 30 effectue un déplacement L30, de la configuration désaccouplée de la figure 1 à la configuration accouplée, par exemple celle la figure 7 avec le terminal 80" dont le diamètre d'interface est maximal. La course maximale C30 est strictement supérieure au déplacement L30. La course maximale C30 pour tout terminal 80 et le déplacement L30 avec le terminal 80" de diamètre d'interface maximal sont strictement supérieurs à une longueur L17 des lumières 17. La longueur L17 est la plus petite distance, prise parallèlement à l'axe X10 entre deux surfaces axiales avant et arrière délimitant chaque lumière 17.

Pour un terminal 80 donné, la position radiale de serrage des patins 50 est une position radiale intermédiaire entre la position radiale initiale et la position radiale de retrait, en particulier la position radiale de retrait avec le corps de douille 60 en butée arrière contre le corps 10. Le corps de douille 60 et les patins 50 sont mobiles longitudinalement par rapport au corps de raccord 10 respectivement entre une position initiale avant, dite « position axiale de butée », montrée sur la figure 1, correspondant à la configuration désaccouplée, une position intermédiaire, reculée selon l'axe X10 par rapport à la position initiale, dite « position axiale de serrage », qui dépend du diamètre d'interface, correspondant à la configuration accouplée, et une position arrière, dite « position axiale de retrait », en particulier la position axiale de retrait montrée sur la figure 3 avec le corps de douille 60 en butée arrière contre le corps 10. Un exemple de position axiale de serrage, correspondant à un diamètre d'interface minimal, est montrée sur la figure 5. Un autre exemple de position axiale de serrage, correspondant à un diamètre d'interface maximal, est montré sur la figure 7. Plus le diamètre d'interface est grand, plus la position axiale de serrage du corps de douille 60 et des patins 50 est avancée. Par rapport à sa position prise relativement au corps 10 lorsque le patin 50 est en position initiale, la surface de coopération 51 de chaque patin 50 en position de serrage est dans une position décalée radialement vers l'intérieur et décalée longitudinalement dans la direction arrière AR11.

Un avantage de la présence d'une course morte du corps de douille 60, du fait du jeu longitudinal J35 entre corps de douille 60 et clapet 30 en configuration désaccouplée, assure qu'en configuration désaccouplée, le clapet 30 est débrayé longitudinalement du corps de douille 60 et donc que la position de fermeture est découplée de la position axiale de butée des patins 50. Le jeu longitudinal J35 reste de préférence inférieur ou égal à 20 % de la course maximale C30, en particulier inférieur ou égal à 15 % de la course maximale C30.

En variante, on peut prévoir que les pattes 35 du clapet 30, plutôt que de coopérer mécaniquement avec le corps de douille 60, coopèrent chacune avec la surface des patins 50 pour que les patins 50 entraînent le clapet 30 vers la position arrière d'ouverture. Plus généralement, l'invention prévoit que les moyens de transmission sont interposés entre le clapet 30 et un élément d'entraînement, parmi le corps de douille 60 et au moins l'un des patins de serrage 50, pour que cet élément d'entraînement puisse entraîner le clapet 30 par l'intermédiaire des moyens de transmission, de la position avant à une position arrière, où le clapet ouvre le conduit interne, lorsque l'élément de raccord 1 passe de la configuration désaccouplée à la configuration accouplée.

En variante, on peut prévoir que, à titre de moyens de transmission, les patins présentent des pattes longitudinales qui viennent en appui contre le clapet pour le repousser. Les pattes longitudinales sont alors animées d'un mouvement longitudinal et d'un mouvement radial entre la position de butée et la position de retrait et entre la position de retrait et la position de serrage.

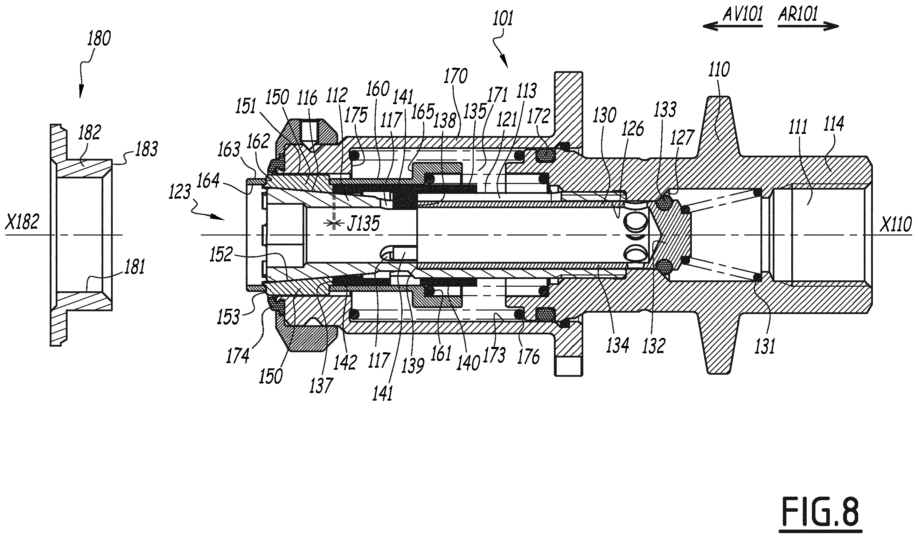

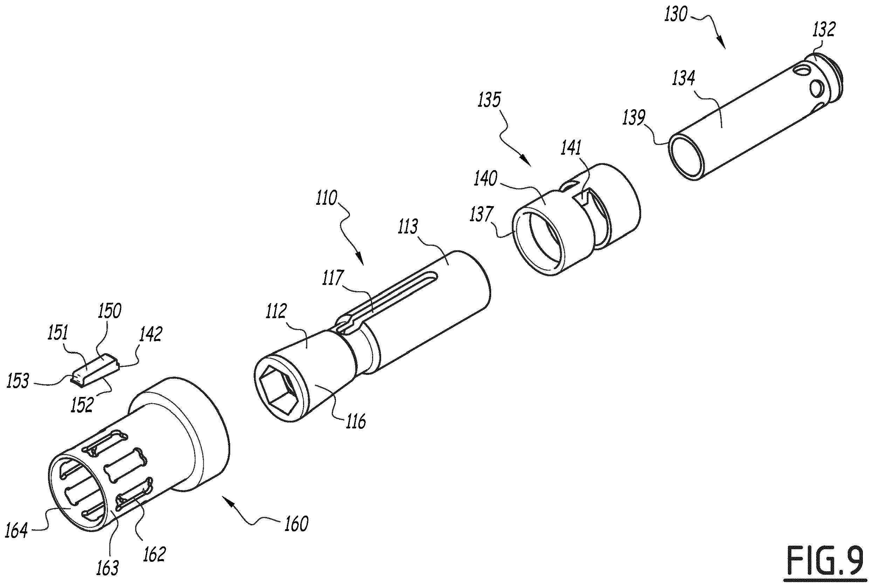

Les figures 8 à 10 montrent un élément de raccord 101, à raccorder à un terminal 80, selon un autre mode de réalisation. Sauf pour les différences principales mentionnées ci-dessous, l'élément de raccord 101 et le terminal 180 ont une structure et un fonctionnement similaires à l'élément de raccord 1 et au terminal 80, et visent une utilisation similaire.

L'élément de raccord 101 comprend un corps de raccord 110, un clapet 130, des patins de serrage 150, un corps de douille 160 et une bague d'appui 170. Ici également, le clapet 130 et le corps de douille 160 sont distincts.

On définit un axe d'emmanchement X110 qui est fixe par rapport au corps de raccord 110 et sur lequel est centré le corps de raccord 110. On définit une direction avant AV101, parallèle à l'axe X110, qui est dirigée en allant de l'élément de raccord 1 vers le terminal à accoupler. On définit une direction arrière AR1, en sens inverse.

Le terminal 180 comprend un corps de terminal 182, qui est tubulaire, pour conduire la circulation de fluide. On définit un axe central X182, avec lequel le corps 182 est coaxial et qui est fixe par rapport au corps 182. Le corps 182 forme une interface 181. Dans le présent exemple, cette surface d'interface 181 est interne. L'interface 181 est à enveloppe cylindrique centrée sur l'axe X182. L'interface 181 débouche sur une face avant 183 du terminal 180. Lorsque le terminal 180 et l'élément de raccord 101 sont accouplés, l'interface 181 est avantageusement coaxiale avec l'axe X110.

Le corps de raccord 110, formé ici par seulement deux pièces assemblées, à savoir une pièce formant une partie arrière 114, et une pièce formant à la fois une partie avant 112 et une partie intermédiaire 113. Le corps 110 délimite un conduit interne 111 pour la circulation du fluide, le conduit interne 111 traversant les parties 112, 113 et 114 suivant l'axe X110.

La partie arrière 114 est destinée à être raccordée à une conduite de fluide similaire à la conduite 99 illustrée pour le mode de réalisation des figures 1 à 7 et est fixée à la pièce formant les parties 112 et 113, par exemple par vissage, par l'intermédiaire de la partie 113.

La partie avant 112 forme une portion avant conique 116, qui est centrée sur l'axe X110, divergente suivant la direction AV101 et tournée vers l'extérieur. La partie avant 112 et la partie intermédiaire 113 forment ensemble une surface radiale externe 121 du corps de raccord 110. Un volume intérieur 171 est délimité radialement entre la bague d'appui 170 et la surface radiale externe 121.

Trois lumières 117, régulièrement réparties autour de l'axe X110, sont ménagées à travers le corps de raccord 110, ici au travers de la partie intermédiaire 113. Les lumières 117 débouchent à la fois dans le conduit interne 111 et dans le volume intérieur 171, au niveau de la surface radiale externe 121 du corps de raccord 110. Le volume intérieur 171 communique fluidiquement avec le conduit interne 111 à travers les lumières 117, notamment lorsque l'élément de raccord est en configuration accouplée.

Le corps de douille 160 est disposé autour de la surface radiale externe 121 du corps de raccord 110. Le corps de douille 160 est mobile en translation suivant l'axe X110 par rapport au corps de raccord 110.

Le corps de douille 160 présente une surface radiale interne 164, faisant radialement face à la portion conique 116, une surface radiale externe 163, ainsi que des logements radiaux 162, qui relient les surfaces 163 et 164 et qui sont répartis régulièrement autour de l'axe X110.

Chaque logement 162 reçoit l'un des patins de serrage 150. Chaque logement 162 présente deux parois axiales parallèles et deux parois orthoradiales parallèles, de façon similaire aux logements 62, pour guider un déplacement radial des patins de serrage 150.

Chaque patin de serrage 150 présente une surface externe 151 à enveloppe cylindrique.

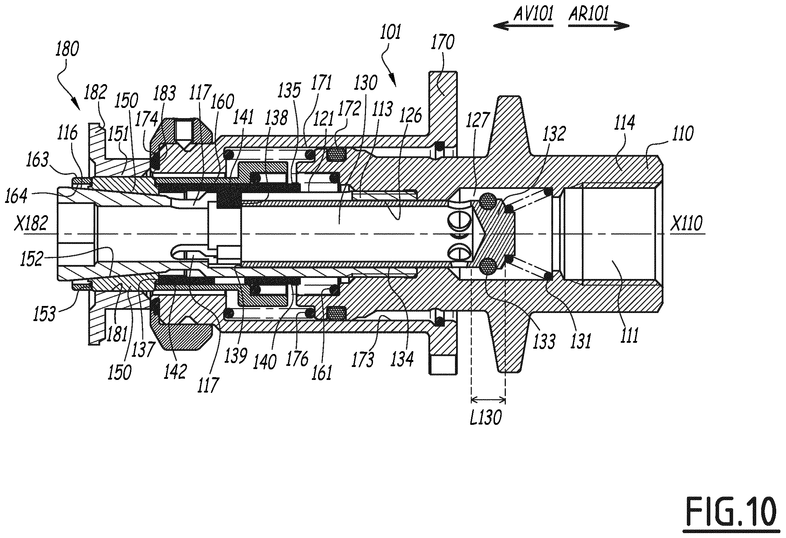

Au sein des logements 162, à l'accouplement, les patins 150 sont radialement mobiles par rapport au corps de douille 160 et par rapport au corps 110, depuis une position radiale initiale, montrée sur la figure 8, jusqu'à une position radiale de serrage montrée sur la figure 10, en passant par une position radiale de butée, non illustrée. Le déplacement radial des patins 150 est obtenu par coopération mécanique d'un talon interne 152 respectif, dont est pourvu chaque patin 150, avec la portion conique 116 du corps de raccord 110, lorsque les patins 150 et le corps de douille 160 translatent suivant l'axe X110.

Lorsque l'élément de raccord 101 est en configuration désaccouplée, les patins 150 sont dans la position radiale de butée, montrée sur la figure 8. En configuration désaccouplée, les patins 150 sont en butée radiale externe contre la surface de butée interne 164 du corps de douille 160, via leur talon 152 respectif.

Les patins 150 ont une face avant 153. Comme montré sur la figure 8, en configuration désaccouplée de l'élément de raccord 101, une partie de la face avant 153 émerge radialement du corps de douille 160 à partir de la surface externe 163 à l'avant des patins 150 et, ainsi, fait axialement face à une embouchure 123 de l'élément de raccord 101. En particulier, les surfaces externes 151 à enveloppe cylindrique des patins 150 délimitent ensemble un cylindre virtuel, dont le diamètre est supérieur au diamètre de la surface externe 163 du corps de douille 160, en avant des patins 150. Le diamètre du cylindre virtuel est également supérieur au diamètre de l'interface interne 181.

La position radiale externe de serrage, montrée sur la figure 10 est obtenue lorsque l'élément de raccord 101 est en configuration accouplée, et est accouplé avec le terminal 180. Dans la position radiale externe de serrage, les patins de serrage 150 coopèrent mécaniquement avec l'interface 181 du terminal 180 et empêchent ainsi un retrait du terminal 180 lorsque l'élément de raccord 101 est dans une configuration accouplée. Lorsque les patins 150 sont en position radiale de serrage, le corps de douille 160 est dans une position axiale de serrage, où le corps de douille 160 est en butée contre les patins 150 suivant la direction AV101. L'élément de raccord 101 comprend un organe de rappel élastique 161, à savoir un ressort, rappelant le corps de douille 160 vers l'avant, notamment vers une position axiale de serrage.

Par l'intermédiaire de cette surface 151, le patin de serrage 150 est conçu pour coopérer mécaniquement avec l'interface 181 interne lorsque l'élément de raccord 101 est en configuration accouplée. A cet effet, l'interface 181 présente une enveloppe cylindrique complémentaire avec celle des surfaces externes 151. Ainsi, les patins 150 retiennent le terminal 180 accouplé via leur surface 151.

Lorsque l'élément de raccord 101 est mis en configuration de retrait alors que l'élément de raccord 101 était en configuration accouplée et était accouplé avec le terminal 180, les patins de serrage 150 atteignent leur position radiale interne de retrait. Dans cette position radiale de retrait, les patins 150, en particulier leur surface externe 151, sont dégagés radialement vers l'intérieur de l'interface 181 du terminal 180, pour ainsi autoriser le retrait du terminal 180 vis-à-vis du corps 110.

Le clapet 130 est disposé à l'intérieur du corps 110, en particulier à l'intérieur de la partie 113.

Le clapet 130 est mobile en translation par rapport au corps de raccord 110 dans le conduit interne 111. Sous l'action d'un ressort 131, le clapet 130 est rappelé élastiquement vers une position avant, où le clapet 130 ferme le conduit interne 111. Cette position avant du clapet 130 est obtenue pour la configuration désaccouplée de l'élément de raccord montrée sur la figure 8. En configuration accouplée, le clapet 130 est dans une position arrière pour ouvrir le conduit 111.

Plus précisément, le clapet 130 comprend une portion centrale pleine 132 et une jupe avant 134. Contrairement au mode de réalisation des figures 1 à 7, aucune jupe arrière n'est prévue. Autrement dit, le clapet 130 est guidé radialement au niveau d'une seule zone, ici via la jupe avant 134, et non de deux zones axialement espacées, comme c'est le cas pour le clapet 30, qui est guidé par les jupes 34 et 36.

La portion centrale pleine 132, délimite, avec le conduit interne 111, en particulier à hauteur de la partie 114 du corps 110, un passage 127 pour le fluide. En configuration désaccouplée où le clapet 130 est en position avant, comme montré sur la figure 8, le passage 127 est plus réduit que pour la configuration accouplée, où le clapet 130 est en position arrière, comme montré sur la figure 10. Ainsi, la réduction du passage 127 fait que le conduit 111 est fermé en configuration désaccouplée, comparativement à la configuration accouplée où le conduit 111 est ouvert. De préférence, on prévoit un joint 133 pour obturer le passage 127 lorsque le clapet 130 est en position avant. Le joint 133 est avantageusement porté par la portion centrale pleine 132 et vient en appui contre la partie arrière 114 lorsque le clapet 130 est en position avant, pour obturer le conduit 111.

Dans le présent exemple, la jupe avant 134 coopère mécaniquement à jeu radial réduit avec une surface radiale interne 126 du corps de raccord 110, pour le guidage radial du mouvement du clapet 130 entre la configuration désaccouplée et la configuration accouplée de l'élément de raccord. La surface radiale interne 126 délimite une partie du conduit interne 111. Ici, la surface radiale interne 126 est formée conjointement par la partie intermédiaire 13 et la partie arrière 114.

La bague d'appui 170 est montée de façon à, en configuration désaccouplée, être disposée autour du corps de douille 160 et des patins 150, comme montré sur la figure 8. Dans le cas présent, la bague d'appui 170 est externe au corps de raccord 110.

La bague d'appui 170 est en étanchéité radiale avec le corps de raccord 110. Pour cela, on prévoit ici un joint d'étanchéité 172, interposé entre la partie arrière 114 et une face radiale interne 173 de la bague d'appui 170. La face radiale interne 173 délimite par ailleurs le volume interne 171.

La bague d'appui 170 comporte un joint frontal 174, qui vient en contact axial avec la face avant 183 du terminal 180, pour assurer une étanchéité axiale entre le terminal 180 et la bague d'appui 170, notamment en configuration accouplée, mais aussi durant l'accouplement.

L'élément de raccord 101 comprend un ressort 176, qui applique un effort de rappel élastique sur la bague d'appui 170 suivant la direction avant AV101 pour ramener la bague 170 suivant la direction avant AV101 par rapport au corps 110. Par exemple, le ressort 176 est un ressort de compression interposé longitudinalement entre le corps de raccord 110 et la bague d'appui 170. De préférence, le ressort 176 est disposé à l'intérieur de la bague 70 autour du ressort 161.

Dans ce mode de réalisation, la bague d'appui 170 sert de bague de manoeuvre, actionnable par un technicien pour mettre l'élément de raccord 101 en configuration de retrait, alors que l'élément de raccord 101 était en configuration accouplée et était accouplé avec le terminal 180. Autrement dit, une seule bague 170 sert à la fois de bague d'appui et de bague de manoeuvre. Pour servir de bague de manoeuvre, la bague d'appui 170 est apte à entraîner les patins 150 de la position radiale de serrage à la position radiale de retrait, en ce que la bague d'appui 170 entraîne le corps de douille 160 de la position axiale de serrage jusqu'à la position axiale de retrait, lorsque la bague d'appui 170 est déplacée vers sa position arrière. A cette fin, on prévoit qu'une surface interne arrière 175 de la bague d'appui 170 vient en appui vers l'arrière contre une surface avant 165 du corps de douille 160, la bague d'appui 170 entraînant ainsi le corps de douille 160 vers l'arrière.

Contrairement à l'élément de raccord 1, l'élément de raccord 101 comprend une bague de transmission 135, qui est distincte du clapet 130, du corps de douille 160 et des patins 150, et qui assure une fonction de moyens de transmission, en étant interposée longitudinalement entre le clapet 130 et un élément parmi le corps de douille 160 et les patins 150. Ici, la bague de transmission 135 est interposée entre le clapet 130 et les patins 150, et non entre le clapet 130 et le corps de douille 160. En pratique, la bague de transmission 135 est montée folle entre les patins 150 et le clapet 130.

La bague de transmission 135 étant ainsi interposée entre les patins 150 et le clapet 130, les patins 150 entraînent le clapet 130, de la position avant à la position arrière par l'intermédiaire de la bague de transmission 135, lorsque l'élément de raccord 101 évolue de la configuration désaccouplée à la configuration accouplée.

Par exemple, la bague de transmission 135 comprend un corps de bague 140, qui s'étend autour du corps 110, en particulier autour de la partie avant 112 et de la partie intermédiaire 113, et comprend des pions 141, qui sont portés sur l'intérieur du corps de bague 140, et font saillie radialement vers l'intérieur, de façon à traverser les lumières 117. Chaque pion 141 s'étend ainsi du volume 171 jusqu'au conduit 111, alors que le corps de bague 140 s'étend seulement dans le volume 171 sans atteindre le conduit 111. Ainsi, les moyens de transmission traversent les lumières 117, notamment en configuration accouplée.

L'organe de rappel élastique 161 est disposé radialement sur l'extérieur par rapport aux moyens de transmission, en particulier par rapport au corps de bague 140.

La bague de transmission 135 présente une surface avant 137, qui vient au contact des patins 150. Ici, la surface avant 137 est formée par le corps de bague 140. Ici, chaque patin 150 comprend une surface arrière 142 respective, par l'intermédiaire de laquelle la surface avant 137 vient au contact du patins 150. La surface arrière 142 est par exemple formée à l'arrière du talon 152. Cette mise en contact permet aux patins 150 d'entraîner la bague de transmission 135, et ainsi le clapet 130, suivant la direction arrière AR101.

La bague de transmission 135 présente aussi une ou plusieurs surfaces arrières 138, chaque surface arrière 138 venant au contact du clapet 130. Ici, chaque surface arrière 138 est formée par l'un des pions 141. Ici, le clapet 130 comprend une surface avant 139, formée à l'avant de la jupe 134, par l'intermédiaire de laquelle les surfaces arrières 138 viennent en contact avec le clapet 130.

Pour permettre à la bague de transmission 135 de transmettre le mouvement des patins 50 au clapet 130, via les pions 141 alors que ces pions 141 sont d'orientation radiale, la dimension longitudinale des lumières 117 est supérieure au déplacement L130 du clapet 130 entre la configuration désaccouplée et la configuration accouplée. Le déplacement L130 est mesuré parallèlement à l'axe X110.

Comme montré sur la figure 8, lorsque l'élément de raccord 101 est en configuration désaccouplée, les moyens de transmission sont débrayés longitudinalement des patins 150 et/ou du clapet 130, en ménageant un jeu longitudinal J135 entre, d'une part, la bague de transmission 135 et, d'autre part, les patins 150 et/ou le clapet 130. Sur la figure 8, le jeu J135 est montré entre la bague de transmission 135 et les patins 150, en particulier entre la surface avant 137 et la surface arrière 142, alors que la ou les surfaces arrières 138 de la bague de transmission 135 sont au contact du clapet 130.

En cours d'accouplement, la surface arrière 142 des patins 150 vient au contact de la surface avant 137 de la bague de transmission 135, la bague de transmission 135 venant, par sa ou ses surfaces arrières 138, au contact de la surface avant 139 du clapet 130, pour permettre aux patins 150 d'entrainer le clapet 130 de sa position avant à sa position arrière, entre la configuration désaccouplée et la configuration accouplée.

Sur les figures 8 à 10, la bague de transmission 135 est dessinée comme une seule pièce monobloc. Toutefois, en pratique, pour le montage de la bague de transmission 135 autour du corps 110, notamment lorsque le corps 110 est lui-même constitué par deux parties assemblées comme ici, la bague de transmission 135 peut être constituée de plusieurs parties assemblées.

En variante, la ou les surfaces arrières 138 de la bague de transmission 135 sont formées sur des pions et/ou des pattes qui sont longitudinaux, plutôt que radiaux comme les pions 141 illustrées, afin de réduire la dimension longitudinale des lumières 117 correspondantes.

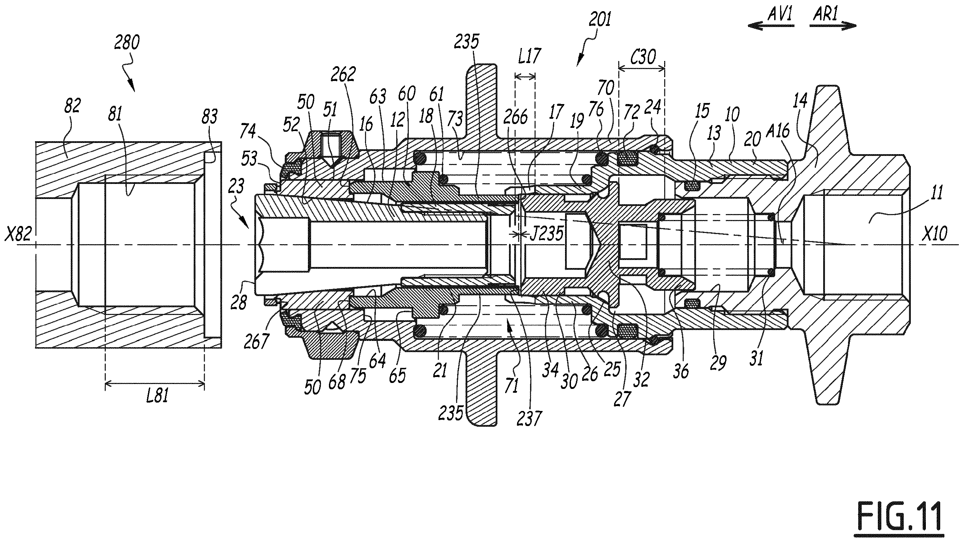

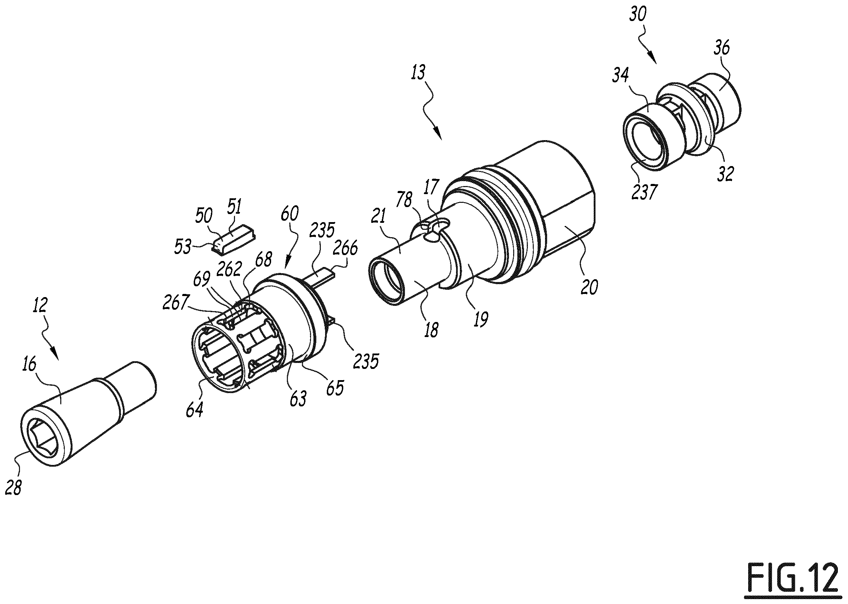

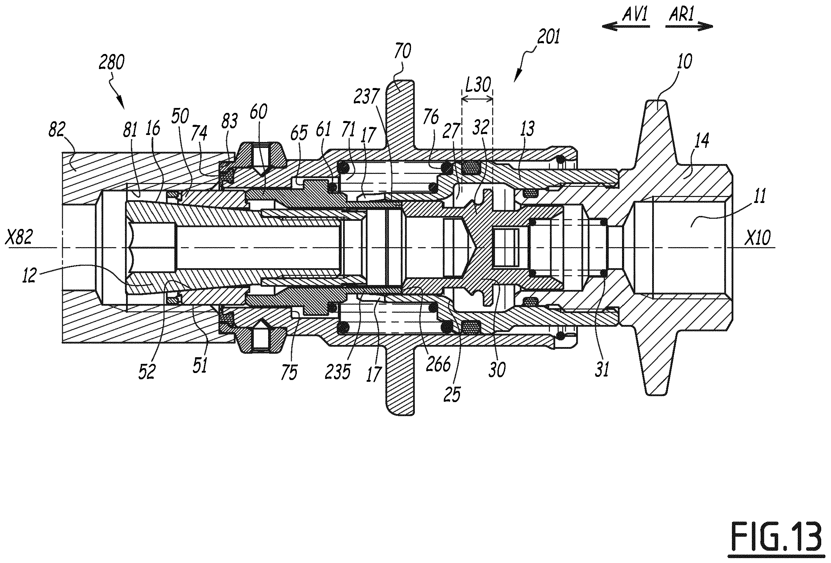

Les figures 11 à 13 montrent un élément de raccord 201, à raccorder à un terminal 280, selon un autre mode de réalisation. Le terminal 280 est identique au terminal 80. L'élément de raccord 201 est identique à l'élément de raccord 1, sauf pour les différences mentionnées ci-après. Toutes les caractéristiques déjà décrites ci-avant pour l'élément de raccord 1 et le terminal 80 s'appliquent à l'élément 201 et au terminal 280, hormis pour les différences mentionnées ci-après, et sont désignées par les mêmes signes de référence sur les figures 11 à 13 que sur les figures 1 à 7. Sur la figure 11, l'élément de raccord 201 est en configuration désaccouplée. Sur la figure 13, l'élément de raccord 201 est en configuration accouplée.

A la différence de l'élément de raccord 1, les moyens de transmission de l'élément de raccord 201 sont formés par le corps de douille 60 de l'élément 201. Pour cela, suivant la direction arrière AR1, le corps de douille 60 se prolonge par exemple en deux pattes longitudinales 235, qui s'étendent vers l'arrière et forment une extrémité arrière du corps de douille 60. Le clapet 30 est alors avantageusement dépourvu des pattes 35 qui étaient prévues pour l'élément de raccord 1. Pour l'élément de raccord 201, les pattes 235 sont engagées dans les lumières 17 et traversent longitudinalement ces lumières 17 parallèlement à l'axe X10, depuis le volume intérieur 71 jusqu'au conduit interne 11. Les dimensions circonférentielles des lumières 17 du corps de raccord 10 correspondent aux dimensions circonférentielles des pattes longitudinales 235. Ainsi, le mouvement longitudinal de chaque patte 235 est guidé par des surfaces orthoradiales parallèles, appartenant au corps de raccord 10 et délimitant la lumière 17, dans laquelle la patte 235 est engagée. Lorsque l'élément de raccord 201 passe de la configuration désaccouplée à la configuration accouplée, le corps de douille 60 entraîne le clapet 30 par l'intermédiaire des pattes 235, de la position à la position arrière, où le clapet 30 ouvre le conduit interne 11. Les pattes 235 constituent donc les moyens de transmission par lesquels le corps de douille 60 est apte à entraîner le clapet 30 de la position avant de fermeture à la position arrière d'ouverture.

Les pattes longitudinales 235 ont chacune une surface d'extrémité arrière 266 respective. Les surfaces d'extrémité arrière 266 sont dirigées suivant la direction arrière AR1, en regard d'une surface avant 237 appartenant au clapet 30. La surface avant 237 est ici formée à l'avant du clapet 30, en particulier de la jupe 34. En configuration désaccouplée, le clapet 30 est en position avant de fermeture, en butée avant contre le corps 10, et un jeu longitudinal J235 existe entre les surfaces d'extrémité 237 et 266. En d'autres termes, les pattes 235 sont débrayées longitudinalement du clapet 30. Comme pour l'élément de raccord 1, il existe une course morte en début d'accouplement, lors du déplacement du corps de douille 60 suivant la direction arrière AR1, correspondant au jeu J235.

A la différence de l'élément de raccord 1, l'élément de raccord 201 ne comporte pas le joint d'étanchéité 33, le clapet 30 de l'élément de raccord 201 étant dépourvu de joint d'étanchéité pour obturer le passage 27. A la place, le passage 27 est réduit sans être obturé de manière étanche lorsque le clapet 30 de l'élément de raccord 201 est en position avant de fermeture, et est augmenté lorsque le clapet 30 est en position arrière d'ouverture. De préférence, lorsque le clapet 30 est en position avant de fermeture, la portion centrale pleine 32 du clapet 30 de l'élément 201 est directement en butée avant contre le corps 10 sous l'effet du ressort 31.

Pour l'élément de raccord 201, la fermeture du conduit interne 11 par le clapet 30 n'est donc pas étanche en configuration désaccouplée, mais le clapet 30 en position avant de fermeture limite néanmoins le passage de fluide hors de l'élément de raccord 201. Cela permet de limiter les fuites de fluide en configuration désaccouplée.

L'élément de raccord 201 comprend des logements 262, pour assurer la même fonction que les logements 62 prévus pour l'élément de raccord 1. Les logements 262 comprennent une surface axiale 267 qui délimite le logement 262 vers l'avant.

En variante, le clapet 30 vient en butée avant contre le corps de douille 60, plutôt que contre le corps de raccord 10, lorsque le clapet 30 est en position avant de fermeture. Dans ce cas, il n'y pas de jeu longitudinal J35 et donc pas de course morte.

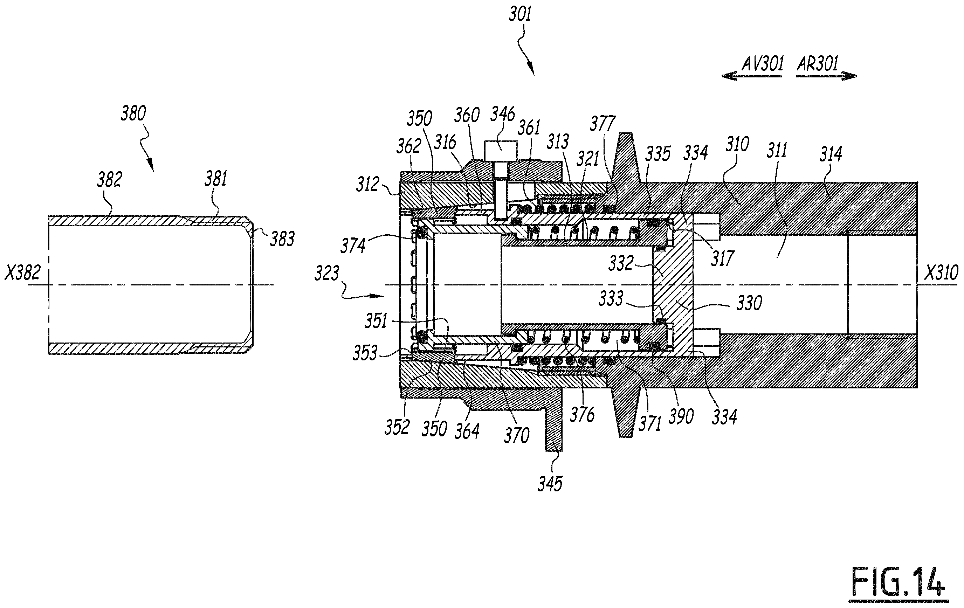

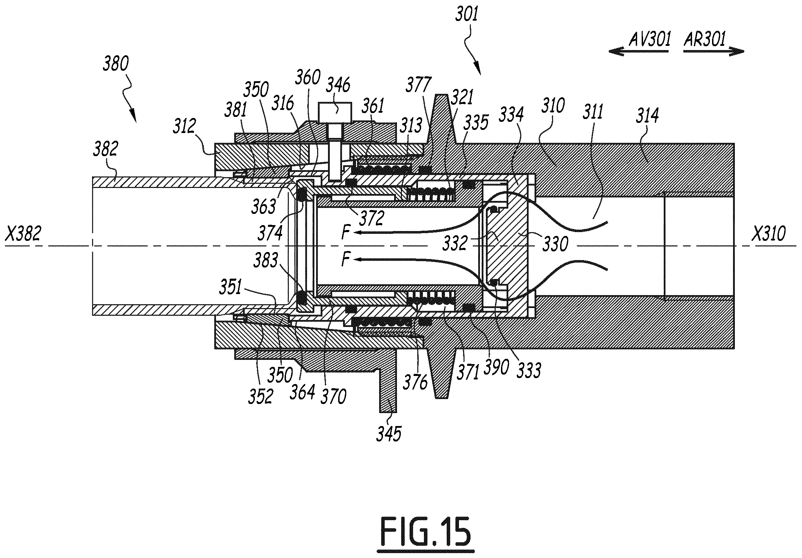

Les figures 14 et 15 montrent un élément de raccord 301, à raccorder à un terminal 380, selon un autre mode de réalisation. Sauf pour les différences principales mentionnées ci-dessous, l'élément de raccord 301 et le terminal 380 ont une structure et un fonctionnement similaires à l'élément de raccord 1 et au terminal 80, et visent une utilisation similaire.

L'élément de raccord 301 comprend un corps de raccord 310, un clapet 330, des patins de serrage 350, un corps de douille 360, une bague d'appui 370 et une bague de manoeuvre 345.

On définit un axe d'emmanchement X310 qui est fixe par rapport au corps de raccord 310 et sur lequel est centré le corps de raccord 310. On définit une direction avant AV301, parallèle à l'axe X310, qui est dirigée en allant de l'élément de raccord 301 vers le terminal 380 à accoupler. On définit une direction arrière AR301, en sens inverse.

Le terminal 380 comprend un corps de terminal 382, qui est tubulaire, pour conduire la circulation de fluide F. On définit un axe central X382, avec lequel le corps 382 est coaxial et qui est fixe par rapport au corps 382. Le corps 382 forme une interface 381. Dans le présent exemple, cette surface d'interface 381 est externe, contrairement à l'interface 81 décrite ci-avant. L'interface 381 est à enveloppe cylindrique centrée sur l'axe X382. L'interface 381 se termine sur une face avant 383 du terminal 380. Par exemple, l'interface 381 constitue un filetage extérieur centré sur l'axe X382. Lorsque le terminal 380 et l'élément de raccord 301 sont accouplés, l'interface 381 est avantageusement coaxiale avec l'axe X310.

Le corps de raccord 310 formé ici par seulement deux pièces assemblées, à savoir une pièce formant à la fois une partie intermédiaire 313 et une partie arrière 314, et autre une pièce formant une partie avant 312. Le corps 310 délimite un conduit interne 311 pour la circulation du fluide F, le conduit interne 311 traversant les parties 312, 313 et 314 suivant l'axe X310.

La partie arrière 314 est destinée à être raccordée à une conduite de fluide similaire à la conduite 99 susmentionnée et est fixée à la pièce formant la partie avant 312 par vissage.

La partie avant 312 forme une portion conique 316, qui est centrée sur l'axe X310, convergente suivant la direction AV301 et tournée vers l'intérieur et suivant la direction arrière AR301.

La partie intermédiaire 313 est ici disposée à l'intérieur des parties avant 312 et arrière 314. La partie intermédiaire 313 forme une surface radiale externe 321 du corps de raccord 310. La surface radiale externe 321 fait donc face radialement aux parties avant 312 et arrière 314 du corps de raccord 310. Un volume intérieur 371 est délimité, radialement à l'intérieur, par la surface radiale externe 321 et, radialement sur l'extérieur, par les parties avant 312 et arrière 314.

L'élément de raccord 301 comprend une lumière 317, ménagée à travers le corps de raccord 310. Un évidement borgne, formé en creux dans une surface radiale interne de la partie arrière 314 délimitant le conduit 311, à une jonction entre la partie arrière 314 et la partie intermédiaire 313, loge le clapet 330. A partir de cet évidement borgne, la lumière 317 traverse le corps 310 suivant la direction avant AV301, par-delà une extrémité arrière de la partie intermédiaire 313, de sorte à déboucher dans le volume intérieur 371. La lumière 317 relie l'évidement borgne du conduit 311 au volume intérieur 371. La lumière 317 délimite le volume intérieur V371 sur l'arrière.

Le clapet 330 comprend une partie pleine 332, qui en configuration désaccouplée, est disposée au moins partiellement à l'intérieur de la partie intermédiaire 313. Le clapet 330 comprend aussi des ponts radiaux 334, qui s'étendent radialement vers l'extérieur à partir de la partie pleine 332 jusqu'à l'évidement borgne du corps 310.

Le corps de douille 360 est disposé autour de la surface radiale externe 321 du corps de raccord 310, à l'intérieur du volume intérieur 371. En particulier, le corps de douille 360 est monté autour de la bague d'appui 370, elle-même disposée autour de la surface radiale externe 321 du corps de raccord 310.

Au contraire du clapet 30 et du corps de douille 60 de l'élément de raccord 1, le clapet 330 et le corps de douille 360 sont solidaires l'un avec l'autre parallèlement à l'axe X310 dans toute configuration de l'élément de raccord 301.

Pour cela, l'élément de raccord 301 comprend une bague de transmission 335, qui relie axialement le corps de douille 360, en particulier une extrémité arrière du corps de douille 360, au clapet 330, en particulier une extrémité radiale externe des ponts radiaux 334. La bague de transmission 335 traverse la lumière 317 lorsque l'élément de raccord 301 est en configuration accouplée, comme montré sur la figure 15.

La bague de transmission 335 constitue ainsi des moyens de transmission qui sont interposés entre le clapet 330 et le corps de douille 360, en étant solidaire à la fois du clapet 330 et du corps de douille 360. Ainsi, le corps de douille 360 et le clapet 330 s'entraînent mutuellement suivant l'axe X310, étant solidaires par l'intermédiaire de la bague de transmission 335. Autrement dit, le corps de douille 360 et le clapet 330 sont solidairement mobiles en translation par rapport au corps de raccord 310, suivant l'axe X310. Contrairement à l'élément de raccord 1, l'élément de raccord 301 ne prévoit pas de jeu longitudinal tel que le jeu J35 en configuration désaccouplée. Le clapet 330, la bague de transmission 335 et le corps de douille 360 peuvent être formés par une même pièce d'un seul tenant, comme représenté sur les figures 14 et 15 ou, en variante, par plusieurs pièces assemblées et solidaires les unes des autres.

L'élément de raccord 301 comprend un organe de rappel élastique 361. L'organe 361 est préférentiellement un ressort de compression interposé entre le corps de douille 360 et le corps de raccord 310. L'organe 361 repousse solidairement le corps de douille 360, la bague de transmission 335 et le clapet 330 suivant la direction avant AV301, par rapport au corps 310. Ainsi, un seul organe de rappel 361 repousse à la fois le corps de douille 360 et le clapet 330, contrairement au clapet 30 décrit ci-avant, qui est repoussé par un ressort 31 indépendant de l'organe de rappel élastique 61 rappelant le corps de douille 60.

Les patins de serrage 350 sont chacun reçus dans un logement 362 respectif, appartenant au corps de douille 360, pour guider leur déplacement en translation radiale. Les patins de serrage 350 sont déplacés en translation, radialement par rapport au corps de douille 360 et par rapport au corps de raccord 310, entre une position radiale externe de retrait, non illustrée, lorsque l'élément de raccord 301 est en configuration de retrait, une position radiale intermédiaire de serrage, montrée sur la figure 15, lorsque l'élément de raccord 301 est en configuration accouplée et une position radiale interne de butée, montrée sur la figure 14, lorsque l'élément de raccord 301 est en configuration désaccouplée. Comme les logements 62, les logements 362 comprennent deux parois axiales parallèles en regard et deux parois orthoradiales parallèles en regard, qui guident le déplacement radial des patins de serrage 350.

Le déplacement en translation radiale des patins 350 dépend de la position axiale des patins 350, les patins 350 étant déplacés en translation radiale par coopération mécanique des patins de serrage 350 avec la portion avant conique 316. Contrairement aux patins 50 décrits ci-avant, les patins 350 sont disposés sur l'intérieur de la portion conique 316, ladite portion conique 316 étant interne et non externe. Pour coopérer avec la portion avant conique 316, chaque patin 350 comprend un talon 352, qui, contrairement au talon 52, est formé sur l'extérieur du patin 350, le talon 352 étant en contact avec la portion conique 316. Chaque patin 350 comprend aussi une surface interne 351 à enveloppe cylindrique. Cette surface interne 351 est orientée radialement à l'opposé du talon 352, donc de la portion conique 316. Par l'intermédiaire de cette surface 351, le patin de serrage 350 est conçu pour coopérer mécaniquement avec l'interface 381 externe, qui présente une enveloppe cylindrique complémentaire de la surface 351. La surface interne 351 porte avantageusement un filetage interne complémentaire avec celui de l'interface 381.

Par coopération avec la portion conique 316, la position radiale interne de butée des patins 350 correspond à une position axiale avant des patins 350, du corps de douille 360, de la bague de transmission 335 et du clapet 330. Cette position axiale avant est adoptée en configuration désaccouplée, comme montrée sur la figure 14. Dans cette position radiale interne de butée, les patins 350 sont en butée radiale par l'intermédiaire du talon 352 contre une surface de butée externe 364 du corps de douille 360 faisant radialement face à la portion conique 316.

Comme montré sur la figure 14, en configuration désaccouplée, les patins 350 émergent du corps de douille 360 radialement vers l'intérieur. En particulier, chaque patin 350 présente une face avant 353, faisant face à une embouchure 323 de l'élément de raccord 301. Une partie de la face avant 353 émerge radialement vers l'intérieur d'une surface interne 363 du corps de douille 360 en avant des patins 350, dans cette configuration désaccouplée, et contre laquelle la face avant 383 du terminal 380 est destinée à venir axialement au contact au début de l'accouplement, pour repousser suivant la direction AR301 un ensemble comprenant les patins 350, le corps de douille 360 et le clapet 330.

Dans la position axiale avant, le clapet 330 ferme le conduit 311. Pour cela, la partie pleine 332 est préférentiellement reçue au moins partiellement à l'intérieur de la partie intermédiaire 313. La partie pleine 332 porte avantageusement un joint d'étanchéité 333, pour assurer une étanchéité radiale entre le clapet 330 et la partie intermédiaire 313, fermant ainsi le conduit 311 de façon étanche. Dans la position axiale avant, le clapet 330 lui-même, notamment la partie pleine 332, ne vient préférentiellement pas en appui axial contre le corps 310.

L'organe de rappel élastique 361 rappelant le clapet 330 et le corps de douille 360 suivant la direction AV301, il rappelle le clapet 330 vers cette position avant de fermeture.

Au contraire de la bague d'appui 70, la bague d'appui 370 est montée à l'intérieur du corps de douille 360 et des patins 350. Une extrémité arrière de la bague d'appui 370 est préférentiellement montée autour de la partie intermédiaire 313, c'est-à-dire autour de la surface radiale externe 321. La bague d'appui 370 est mobile en translation suivant l'axe X310 par rapport au corps 310 et n'est pas solidaire avec l'ensemble comprenant le corps de douille 360 et le clapet 330.

Un joint d'étanchéité 372 est interposé entre une surface interne du corps de douille 360, à l'arrière des patins 350, et une face radiale externe de la bague d'appui 370. Un joint d'étanchéité 377 est interposé entre, d'une part, le corps de douille 360 ou la bague de transmission 335 et, d'autre part, la partie avant 312 ou la partie arrière 314 du corps de raccord 310. A son extrémité arrière, la partie intermédiaire 313 porte avantageusement un joint d'étanchéité 390 en contact glissant avec la surface radiale interne de la bague de transmission 335. Les joints 377 et 390 assurent une étanchéité au niveau de la lumière 317, entre le conduit interne 311 et le volume intérieur 371.

A une extrémité avant de la bague d'appui 370 est logé un joint frontal 374, destiné à venir en appui axial contre la face avant 383 du terminal 380 durant l'accouplement et en configuration accouplée.

L'élément de raccord comprend un ressort 376 qui applique un effort de rappel élastique sur la bague d'appui 370 suivant la direction avant AV301 pour ramener la bague 370 suivant la direction avant AV301. Par exemple, le ressort 376 est un ressort de compression, qui est interposé longitudinalement entre la partie intermédiaire 313 du corps de raccord 10 et la bague d'appui 370. De préférence, le ressort 376 est disposé radialement entre la partie intermédiaire 313 et le corps de douille 360 et/ou la bague de transmission 335.

Comme montré sur la figure 15, par coopération avec la portion conique 316, la position radiale intermédiaire de serrage des patins 350 correspond à une position axiale intermédiaire des patins 350, du corps de douille 360 et du clapet 330. Par rapport à sa position prise relativement au corps 310 lorsque le patin 350 est en position radiale initiale, la surface de coopération 351 de chaque patin 350 en position radiale de serrage est dans une position décalée radialement vers l'extérieur et décalée longitudinalement dans la direction arrière AR301.

Lorsque l'élément de raccord 301 est en configuration accouplée et est accouplé avec le terminal 380, les patins 350 sont en position radiale intermédiaire de serrage, de façon à coopérer mécaniquement avec l'interface 381 du terminal 380, pour empêcher un retrait du terminal 380 par rapport au corps de raccord 310. Le corps de douille 360 est alors dans la position axiale de serrage, où le corps de douille 360 est en butée suivant la direction avant AV301 contre les patins 350, sous l'action de l'organe de rappel élastique 361. En avant des patins 350, le corps de douille 360 est de diamètre intérieur supérieur à celui de l'interface 381. Ainsi, l'interface 381 est reçue au moins en partie à l'intérieur du corps de douille 360 en configuration accouplée.

Dans la position axiale intermédiaire de serrage, le corps de douille 360 ouvre le conduit 311 par l'intermédiaire de la lumière 317. Autrement dit, le corps de douille 360 a ouvert le conduit interne 311, lorsque l'élément de raccord 301 évolue de la configuration désaccouplée à la configuration accouplée. En particulier, en position arrière d'ouverture, la partie pleine 332 est en retrait suivant la direction AR301 par rapport à la partie intermédiaire 313. Le flux F peut circuler dans le conduit 311 notamment entre la partie arrière 314 et la partie intermédiaire 313, en traversant le clapet 330, entre les ponts radiaux 334 dans l'évidement borgne.

Lorsque l'élément de raccord 301 est mis en configuration de retrait, alors que l'élément de raccord 301 était en configuration accouplée et était accouplé avec le terminal 380, les patins 350 sont mis à distance de l'interface 381, radialement vers l'extérieur. Les surfaces internes 351 à enveloppe cylindrique des patins 150 délimitent alors ensemble un cylindre virtuel dont le diamètre est inférieur au diamètre minimum de l'interface externe 381. Les patins 350 autorisent alors le retrait du terminal suivant la direction avant AV301 par rapport au corps de raccord 310.

Par coopération des patins 350 avec la portion conique 316, la position radiale externe de retrait des patins 350 correspond à une position axiale arrière des patins 350, du corps de douille 360 et du clapet 330.

Au contraire de l'élément de raccord 1, la bague de manoeuvre 345 est formée par une bague distincte de la bague formant la bague d'appui 370. La bague de manoeuvre 345 est externe au corps de raccord 310, entourant ici la partie avant 312. La bague de manoeuvre 345 est ici solidaire du corps de douille 360, par exemple par l'intermédiaire d'une vis 346, traversant radialement le corps 310 pour relier la bague de manoeuvre 345 au corps de douille 360. Pour le moins, la bague de manoeuvre 345 est apte à entraîner le corps de douille 360 suivant la direction arrière AR301 alors que l'élément 301 est en configuration accouplée, et ainsi mettre l'élément 301 dans la configuration de retrait.

En variante du mode de réalisation des figures 14 et 15, il est possible de prévoir que la bague 335 est longitudinalement interposée entre le clapet 330 et le corps de douille 360, tout en constituant une pièce séparée du corps de douille 360, du clapet 330, ou à la fois du corps de douille 360 et du clapet 330. Cette bague de transmission séparée peut alternativement être disposée entre le clapet 330 et les patins 350.

Toute caractéristique décrite ci-avant pour l'un des modes de réalisation ou l'une des variantes s'applique aux autres modes de réalisation et variantes décrits ci-avant, pour autant que techniquement possible.

## Revendications

1. Elément de raccord (1; 101; 201; 301), pour un raccordement fluidique à un terminal (80; 180; 280; 380), le terminal ayant une interface (81; 181; 381) à enveloppe cylindrique, l'élément de raccord (1; 101; 201; 301) comprenant :
- un corps de raccord (10; 110; 310), délimitant un conduit interne (11; 111; 311 ) pour une circulation de fluide (F), le conduit interne (11; 111; 311) s'étendant selon un axe longitudinal (X10 ; X110 ; X310),
- un clapet (30; 130; 330), mobile en translation longitudinalement par rapport au corps de raccord (10; 110; 310) dans le conduit interne (11; 111; 311), le clapet (30; 130; 330) étant rappelé élastiquement dans une direction avant (AV1 ; AV101 ; AV301) vers une position avant, où le clapet (30; 130; 330) ferme le conduit interne (11; 111; 311), dans une configuration désaccouplée de l'élément de raccord (1; 101; 201;301), et
- des patins de serrage (50; 150; 350),
**caractérisé en ce que** l'élément de raccord (1; 101; 201; 301) comprend :
- un corps de douille (60; 160; 360), disposé autour d'une première surface radiale (21; 121; 321) du corps de raccord (10; 110; 310), la première surface radiale (21; 121; 321) étant radialement tournée dans la direction opposée à l'axe longitudinal (X10; X110; X310), le corps de douille étant mobile en translation longitudinalement par rapport au corps de raccord (10; 110; 310),
chaque patin de serrage (50; 150; 350) étant reçu dans un logement (62; 162; 262 ; 362) respectif appartenant au corps de douille (60; 160; 360),
chaque patin de serrage étant déplacé en translation radialement par rapport au corps de douille (60; 160; 360), au sein de leur logement respectif, et par rapport au corps de raccord (10; 110; 310), par coopération mécanique du patin de serrage (50; 150; 350) avec une portion conique (16; 116; 316) du corps de raccord (10; 110; 310), centrée sur l'axe longitudinal (X10 ;X110 ;X310) et tournée suivant une direction arrière (AR1; AR101; AR301), ledit déplacement en translation radiale s'effectuant d'une position radiale initiale du patin de serrage (50; 150; 350), en configuration désaccouplée de l'élément de raccord, à une position radiale de serrage du patin de serrage (50; 150; 350), décalée le long de l'axe longitudinal (X10 ; X110 ; X310) suivant la direction arrière (AR1; AR101 ; AR301) par rapport à la position radiale initiale,
chaque patin de serrage (50; 150; 350) comprenant une surface de coopération (51 ; 151 ; 351) formée radialement à l'opposé de la portion conique (16; 116; 316) et configurée pour coopérer mécaniquement avec l'interface (81; 181; 381) du terminal et ainsi empêcher un retrait du terminal (80; 180; 280; 380) par rapport au corps de raccord (10; 110; 310) lorsque le patin de serrage (50; 150; 350) est en position radiale de serrage,
- un premier organe de rappel élastique (61; 161; 361), rappelant le corps de douille (60; 160; 360) dans la direction avant (AV1; AV101; AV301), le corps de douille (60; 160; 360) étant en butée suivant la direction avant (AV1; AV101; AV301) contre les patins de serrage (50; 150; 350) lorsque les patins de serrage (50; 150; 350) sont dans la position radiale de serrage,
- des moyens de transmission (35; 135; 235; 335), interposés entre le clapet (30; 130; 330) et un élément d'entraînement, parmi le corps de douille (60; 160; 360) et au moins l'un des patins de serrage (50; 150; 350), l'élément d'entraînement étant apte à entraîner le clapet (30; 130; 330) par l'intermédiaire des moyens de transmission (35; 135; 235; 335), de la position avant à une position arrière, où le clapet (30; 130; 330) ouvre le conduit interne (11; 111; 311), lorsque les patins de serrage (50; 150; 350) se déplacent de la position radiale initiale à la position radiale de serrage, et
- au moins une lumière (17; 117; 317), ménagée à travers le corps de raccord (10; 110; 310), reliant le conduit interne (11; 111; 311) à un volume (71 ; 171 ; 371) entourant la première surface radiale (21; 121; 321) du corps de raccord (10; 110; 310), les moyens de transmission (35; 135; 235; 335) s'étendant à travers la ou les lumières (17; 117; 317) lorsque le clapet (30; 130; 330) est en position arrière.

2. Elément de raccord (1; 201 ; 301) selon la revendication 1, dans lequel les moyens de transmission (35; 235; 335) sont aptes à traverser longitudinalement la ou les lumières (17) depuis le volume (71 371) entourant la première surface radiale (21; 321) du corps de raccord (10; 310) jusque dans le conduit interne (11; 311).

3. Elément de raccord (1; 201) selon la revendication 2, dans lequel, suivant l'axe longitudinal (X10), la ou chaque lumière (17) a une longueur (L17) qui est strictement inférieure à une course maximale (C30) parcourue par le clapet (30), lorsque le corps de douille (60) est déplacé longitudinalement de sa position en configuration désaccouplée de l'élément de raccord (1 ; 201) à une position de butée arrière contre le corps de raccord (10).

4. Elément de raccord (1; 201) selon l'une quelconque des revendications 1 à 3, dans lequel les moyens de transmission (35; 235) sont formés par l'un parmi le clapet (30) ou l'élément d'entraînement et forment une première surface (37; 266) apte à venir en appui selon l'axe longitudinal (X10) sur une deuxième surface (66; 237), appartenant à l'autre parmi l'élément d'entraînement ou le clapet (30).

5. Elément de raccord (1; 201) selon la revendication 4, dans lequel les moyens de transmission (35; 235) comprennent au moins une patte longitudinale et dans lequel la lumière (17) est délimitée par des surfaces de guidage (78) du corps de raccord en regard, dans une direction circonférentielle à l'axe longitudinal (X10 ; X110 ; X310), la patte longitudinale étant apte à venir au contact de chacune des surfaces de guidage (78).

6. Elément de raccord (1) selon la revendication 5, dans lequel :
- la ou chaque patte longitudinale est formée par le clapet (30) ;
- la première surface (37) est formée à une extrémité avant du clapet (30) ; et
- la deuxième surface (66) est formée à une extrémité arrière du corps de douille (60).

7. Elément de raccord (101) selon l'une quelconque des revendications 1 à 3, dans lequel les moyens de transmission (135) sont formés par une bague de transmission, distincte du corps de douille (160), des patins de serrage (150) et du clapet (130), la bague de transmission ayant une surface avant (137) apte à venir au contact d'une surface arrière (142) du corps de douille (160) ou des patins de serrage (150) et ayant une surface arrière (138) apte à venir au contact d'une surface avant (139) du clapet (130).

8. Elément de raccord (1; 101; 201) selon l'une quelconque des revendications précédentes, dans lequel, lorsque l'élément de raccord (1; 101; 201) est en configuration désaccouplée, les moyens de transmission (35; 135; 235) sont débrayés longitudinalement de l'élément d'entraînement et/ou du clapet (30; 130).

9. Elément de raccord (301) selon l'une quelconque des revendications 1 ou 2, dans lequel, dans toute configuration de l'élément de raccord (301) :
- les moyens de transmission (335) sont solidaires de l'élément d'entraînement et du clapet (330) parallèlement à l'axe longitudinal (X10 ; X110 ; X310) ; et
- outre le rappel du corps de douille (360) dans la direction avant (AV1; AV101; AV301), le premier organe de rappel élastique (361) rappelle le clapet (330) vers la position avant.

10. Elément de raccord (1; 101; 201) selon l'une quelconque des revendications précédentes, dans lequel l'élément de raccord (1; 101; 201) est configuré pour que le raccordement fluidique s'effectue avec le terminal (80; 180; 280) dont l'interface (81; 181) est à enveloppe cylindrique interne et dans lequel la portion conique (16 ; 116) est formée par la première surface radiale (21; 121) du corps de raccord (10 ; 110).

11. Elément de raccord (1; 101; 201) selon la revendication 10, dans lequel l'élément de raccord (1; 101; 201) comprend :
- une bague d'appui (70; 170) qui, lorsque l'élément de raccord (1; 101; 201) est en configuration désaccouplée, est montée autour du corps de douille (60; 160) et des patins de serrage (50; 150), et
- un deuxième organe de rappel élastique (76; 176) repoussant la bague d'appui dans la direction avant (AV1; AV101),
et dans lequel :
- le volume (71; 171) entourant la première surface radiale (21; 121) du corps de raccord (10; 110) est délimité radialement sur l'extérieur par la bague d'appui (70 ; 170) et communique fluidiquement avec le conduit interne (11; 111) à travers la ou les lumières (17; 117); et
- une extrémité avant de la bague d'appui (70; 170) a un joint frontal (74; 174) pour un contact étanche avec le terminal (80; 180; 280), alors que la bague d'appui (70; 170) est en étanchéité radiale avec le corps de raccord (10; 110) à l'arrière du volume (71 ; 171) délimité radialement par la bague d'appui et la première surface radiale (21; 121) du corps de raccord (10 ; 110).

12. Elément de raccord (1; 101; 201 ; 301) selon l'une quelconque des revendications précédentes, dans lequel chaque patin de serrage (50; 150; 350) a une face avant (53; 153; 353), qui délimite la surface de coopération (51 ; 151 ; 351) dans la direction avant (AV1; AV101), et dans lequel, en configuration désaccouplée :
- les patins de serrage (50; 150; 350) sont en butée radiale contre une surface de butée (64; 164; 364) du corps de douille (60; 160; 360) ; et
- une partie de la face avant (53; 153; 353) de chaque patin de serrage (50; 150; 350) émerge d'une surface (63 ; 163 ; 363) du corps de douille opposée à la surface de butée (64; 164; 364) et disposée à l'avant des patins de serrage (50; 150; 350), chaque face avant faisant axialement face à une embouchure (23; 123; 323) de l'élément de raccord (1; 101; 201; 301).

13. Elément de raccord (1; 101; 201; 301) selon l'une quelconque des revendications précédentes, dans lequel le premier organe de rappel élastique (61; 161; 361) est disposé radialement sur l'extérieur par rapport aux moyens de transmission (35; 135; 235; 335).

14. Elément de raccord (1; 201) selon l'une quelconque des revendications précédentes, dans lequel le clapet (30) comprend :
- une portion centrale pleine (32), délimitant, avec le corps de raccord (10), un passage (27) pour le fluide (F) dans le conduit interne (11), le passage (27) étant réduit lorsque le clapet (30) est en position avant, par rapport à la position arrière, le clapet (30) en position avant étant de préférence en appui contre le corps de raccord (10) par l'intermédiaire d'un joint d'étanchéité (33) pour fermer le conduit interne (11) de manière étanche ;
- une jupe arrière (36) ; et
- une jupe avant (34), la jupe arrière (36) et la jupe avant (34) étant disposées de part et d'autre de la portion centrale pleine (32) selon l'axe longitudinal (X10) et coopérant mécaniquement à jeu radial réduit avec une deuxième surface radiale interne (26, 29) du corps de raccord (10), pour le guidage radial du mouvement du clapet (30) entre la position avant et la position arrière, la deuxième surface radiale interne (26, 29) délimitant le conduit interne (11).

15. Elément de raccord (1; 101; 301) selon l'une quelconque des revendications précédentes, dans lequel chaque logement (62; 162; 362) du corps de douille (60 ; 160; 360) recevant l'un des patins de serrage (50; 150; 350) est délimité longitudinalement par deux parois axiales parallèles (67, 68) en regard et circonférentiellement par deux parois orthoradiales (69) parallèles en regard, les parois axiales et orthoradiales étant aptes à venir au contact du patin de serrage (50; 150; 350) pour guider le déplacement radial du patin de serrage (50; 150; 350) par rapport au corps de douille (60; 160; 360).

## Patentansprüche

1. Anschlusselement (1; 101; 201; 301), für einen fluidischen Anschluss an ein Endgerät (80; 180; 280; 380), wobei das Endgerät eine Schnittstelle (81; 181; 381) mit zylindrischem Mantel aufweist, das Anschlusselement (1; 101; 201; 301) umfassend:
- einen Anschlusskörper (10; 110; 310), der einen inneren Kanal (11; 111; 311) für eine Fluidzirkulation (F) begrenzt, wobei sich der innere Kanal (11; 111; 311) entlang einer Längsachse (X10; X110; X310) erstreckt,
- ein Ventil (30; 130; 330), das in Längsrichtung in Bezug auf den Anschlusskörper (10; 110; 310) in dem inneren Kanal (11; 111; 311) bewegbar ist, wobei die Ventil (30; 130; 330) in einer Vorwärtsrichtung (AV1; AV101; AV301) elastisch in eine vordere Position vorgespannt ist, in der das Ventil (30; 130; 330) den inneren Kanal (11; 111; 311) in einer von dem Anschlusselement (1; 101; 201; 301) entkoppelten Konfiguration schließt, und
- Klemmkufen (50; 150; 350),
**dadurch gekennzeichnet, dass** das Anschlusselement (1; 101; 201; 301) Folgendes umfasst:
- einen Hülsenkörper (60; 160; 360), der um eine erste radiale Fläche (21; 121; 321) des Anschlusskörpers (10; 110; 310) herum angeordnet ist, wobei die erste radiale Fläche (21; 121; 321) radial in die Richtung entgegengesetzt zu der Längsachse (X10; X110; X310) weist, wobei der Hülsenkörper in Längsrichtung in Bezug auf den Anschlusskörper (10; 110; 310) translatorisch bewegbar ist,
jede Klemmkufe (50; 150; 350) in einem jeweiligen Gehäuse (62; 162; 262; 362) aufgenommen ist, das zu dem Hülsenkörper (60; 160; 360) gehört,
jede Klemmkufe durch mechanisches Zusammenwirken der Klemmkufe (50; 150; 350) mit einem konischen Abschnitt (16; 116; 316) des Anschlusskörpers (10; 110; 310), der auf der Längsachse (X10; X110; X310) zentriert und in einer hinteren Richtung (AR1; AR101; AR301) gedreht ist, radial in Bezug auf den Hülsenkörper (60; 160; 360) innerhalb ihrer jeweiligen Aufnahme und in Bezug auf den Anschlusskörper (10; 110; 310) translatorisch verschoben wird, wobei die radiale Translationsbewegung von einer anfänglichen radialen Position der Klemmkufe (50; 150; 350) in einer von dem Anschlusselement entkoppelten Konfiguration zu einer radialen Klemmposition der Klemmkufe (50; 150; 350) erfolgt, die entlang der Längsachse (X10; X110; X310) in der hinteren Richtung (AR1; AR101; AR301) in Bezug auf die anfängliche radiale Position versetzt ist,
jeder Klemmkufe (50; 150; 350) eine zusammenwirkende Fläche (51; 151; 351) umfasst, die radial gegenüber dem konischen Abschnitt (16; 116; 316) gebildet und konfiguriert ist, um mechanisch mit der Schnittstelle (81; 181; 381) des Endgeräts zusammenzuwirken und dadurch ein Zurückziehen des Anschlusses (80; 180; 280; 380) in Bezug auf den Anschlusskörper (10; 110; 310) zu verhindern, wenn die Klemmkufe (50; 150; 350) in der radialen Klemmstellung ist,
- ein erstes elastisches Rückstellglied (61; 161; 361), das den Hülsenkörper (60; 160; 360) in der Vorwärtsrichtung (AV1; AV101; AV301) zurückstellt, wobei der Hülsenkörper (60; 160; 360) in der Vorwärtsrichtung (AV1; AV101; AV301) an der Klemmkufe (50; 150; 350) anliegt, wenn die Klemmkufen (50; 150; 350) in der radialen Klemmstellung sind,
- Übertragungseinrichtungen (35; 135; 235; 335), die zwischen dem Ventil (30; 130; 330) und einem Antriebselement von dem Hülsenkörper (60; 160; 360) und mindestens einer der Klemmkufen (50; 150; 350) angeordnet sind, wobei das Antriebselement geeignet ist, um das Ventil (30; 130; 330) über die Übertragungseinrichtungen (35; 135; 235; 335) von der vorderen Position zu einer hinteren Position anzutreiben, in der das Ventil (30; 130; 330) den inneren Kanal (11; 111; 311) öffnet, wenn sich die Klemmkufen (50; 150; 350) von der anfänglichen radialen Position zu der radialen Klemmposition bewegen, und
- mindestens ein Lumen (17; 117; 317), das durch den Anschlusskörper (10; 110; 310) hindurch ausgebildet ist und den inneren Kanal (11; 111; 311) mit einem Volumen (71; 171; 371) verbindet, das die erste radiale Fläche (21; 121; 321) des Anschlusskörpers (10; 110; 310) umgibt, die Übertragungseinrichtungen (35; 135; 235; 335) sich durch das oder die Lumen (17; 117; 317) erstrecken, wenn das Ventil (30; 130; 330) in der hinteren Position ist.

2. Anschlusselement (1; 201; 301) nach Anspruch 1, wobei die Übertragungseinrichtungen (35; 235; 335) geeignet sind, um das oder die Lumen (17) von dem Volumen (71 371), das die erste radiale Oberfläche (21; 321) des Verbindungskörpers (10; 310) umgibt, bis in den inneren Kanal (11; 311) längs zu durchqueren.

3. Anschlusselement (1; 201) nach Anspruch 2, wobei entlang der Längsachse (X10) das oder jedes Lumen (17) eine Länge (L17) aufweist, die strikt kleiner ist als ein maximaler Hub (C30), der von dem Ventil (30) zurückgelegt wird, wenn der Hülsenkörper (60) in Längsrichtung aus seiner Position in einer von dem Anschlusselement (1; 201) entkoppelten Konfiguration in eine Position verschoben wird, in der er hinten an dem Anschlusskörper (10) anliegt.

4. Anschlusselement (1; 201) nach einem der Ansprüche 1 bis 3, wobei die Übertragungseinrichtungen (35; 235) durch eines von dem Ventil (30) oder dem Antriebselement gebildet sind und eine erste Fläche (37; 266) bilden, die geeignet ist, um entlang der Längsachse (X10) auf einer zweiten Fläche (66; 237) anzuliegen, die zu dem anderen von dem Antriebselement oder dem Ventil (30) gehört.

5. Anschlusselement (1; 201) nach Anspruch 4, wobei die Übertragungseinrichtungen (35; 235) mindestens eine Längslasche umfassen und wobei das Lumen (17) durch gegenüberliegende Führungsflächen (78) des Anschlusskörpers in einer Umfangsrichtung zu der Längsachse (X10; X110; X310) begrenzt ist, wobei die Längslasche geeignet ist, um mit jeder der Führungsflächen (78) in Kontakt zu kommen.

6. Anschlusselement (1) nach Anspruch 5, wobei:
- die oder jede Längslasche durch das Ventil (30) gebildet ist;
- die erste Fläche (37) an einem vorderen Ende des Ventils (30) gebildet ist; und
- die zweite Fläche (66) an einem hinteren Ende des Hülsenkörpers (60) gebildet ist.

7. Anschlusselement (101) nach einem der Ansprüche 1 bis 3, wobei die Übertragungseinrichtungen (135) durch einen Übertragungsring gebildet sind, der sich von dem Hülsenkörper (160), den Klemmkufen (150) und dem Ventil (130) unterscheidet, wobei der Übertragungsring eine vordere Fläche (137) aufweist, die geeignet ist, um mit einer hinteren Fläche (142) des Hülsenkörpers (160) oder der Klemmkufe (150) in Kontakt zu kommen, und eine hintere Fläche (138) aufweist, die geeignet ist, um mit einer vorderen Fläche (139) des Ventils (130) in Kontakt zu kommen.

8. Anschlusselement (1; 101; 201) nach einem der vorherigen Ansprüche, wobei, wenn das Anschlusselement (1; 101; 201) in einer entkoppelten Konfiguration ist, die Übertragungseinrichtungen (35; 135; 235) in Längsrichtung von dem Antriebselement und/oder dem Ventil (30; 130) entkoppelt sind.

9. Anschlusselement (301) nach einem der Ansprüche 1 oder 2, wobei in jeder Konfiguration des Anschlusselements (301):
- die Übertragungseinrichtungen (335) mit dem Antriebselement und dem Ventil (330) parallel zu der Längsachse (X10; X110; X310) fest verbunden sind; und
- neben der Vorspannung des Hülsenkörpers (360) in der Vorwärtsrichtung (AV1; AV101; AV301) das erste elastische Rückstellglied (361) das Ventil (330) in die Vorwärtsposition vorspannt.

10. Anschlusselement (1; 101; 201) nach einem der vorherigen Ansprüche, wobei das Anschlusselement (1; 101; 201) konfiguriert ist, damit der fluidische Anschluss mit dem Endgerät (80; 180; 280) erfolgt, dessen Schnittstelle (81; 181) einen zylindrischen inneren Mantel aufweist, und wobei der konische Abschnitt (16; 116) durch die erste radiale Oberfläche (21; 121) des Anschlusskörpers (10; 110) gebildet ist.

11. Anschlusselement (1; 101; 201) nach Anspruch 10, wobei das Anschlusselement (1; 101; 201) Folgendes umfasst:
- einen Stützring (70; 170), der, wenn das Anschlusselement (1; 101; 201) in der entkoppelten Konfiguration ist, um den Hülsenkörper (60; 160) und die Klemmkufen (50; 150) herum montiert ist, und
- ein zweites elastisches Rückstellglied (76; 176), das den Stützring in die Vorwärtsrichtung (AV1; AV101) drückt, und wobei:
- das Volumen (71; 171), das die erste radiale Fläche (21; 121) des Anschlusskörpers (10; 110) umgibt, radial nach außen durch den Stützring (70; 170) begrenzt ist und steht durch das oder die Lumen (17; 117) in Fluidverbindung mit dem inneren Kanal (11; 111) ist; und
- ein vorderes Ende des Stützrings (70; 170) eine vordere Dichtung (74; 174) für einen abdichtenden Kontakt mit dem Anschluss (80; 180; 280) aufweist, während der Stützring (70; 170) radial gegen den Anschlusskörper (10; 110) hinter dem Volumen (71; 171) abgedichtet ist, das radial durch den Stützring und die erste radiale Fläche (21; 121) des Anschlusskörpers (10; 110) begrenzt ist.

12. Anschlusselement (1; 101; 201; 301) nach einem der vorherigen Ansprüche, wobei jede Klemmkufe (50; 150; 350) eine Vorderseite (53; 153; 353) aufweist, die die zusammenwirkende Fläche (51; 151; 351) in der Vorwärtsrichtung (AV1; AV101) begrenzt, und wobei in der entkoppelten Konfiguration:
- die Klemmkufe (50; 150; 350) radial an einer Anschlagfläche (64; 164; 364) des Hülsenkörpers (60; 160; 360) anliegen; und
- ein Teil der Vorderseite (53; 153; 353) jeder Klemmkufe (50; 150; 350) aus einer Fläche (63; 163; 363) des Hülsenkörpers hervorsteht, die der Anschlagfläche (64; 164; 364) gegenüberliegt und an der Vorderseite der Klemmkufe (50; 150; 350) angeordnet ist, jede Vorderseite axial einer Mündung (23; 123; 323) des Anschlusselements (1; 101; 201; 301) zugewandt ist.

13. Anschlusselement (1; 101; 201; 301) nach einem der vorherigen Ansprüche, wobei das erste elastische Rückstellglied (61; 161; 361) in Bezug auf die Übertragungseinrichtungen (35; 135; 235; 335) radial außen angeordnet ist.

14. Anschlusselement (1; 201) nach einem der vorherigen Ansprüche, wobei das Ventil (30) Folgendes umfasst:
- einen massiven mittleren Abschnitt (32), der mit dem Anschlusskörper (10) einen Durchgang (27) für das Fluid (F) in dem inneren Kanal (11) begrenzt, wobei der Durchgang (27) reduziert ist, wenn das Ventil (30) in der vorderen Position ist, im Vergleich zur hinteren Position, wobei das Ventil (30) in der vorderen Position vorzugsweise über eine Dichtung (33) an dem Anschlusskörper (10) anliegt, um den inneren Kanal (11) dicht zu verschließen;
- eine hintere Schürze (36); und
- eine vordere Schürze (34), wobei die hintere Schürze (36) und die vordere Schürze (34) auf beiden Seiten des massiven mittleren Abschnitts (32) entlang der Längsachse (X10) angeordnet sind und mechanisch mit reduziertem radialem Spiel mit einer zweiten inneren radialen Fläche (26, 29) des Anschlusskörpers (10) zusammenwirken, um die Bewegung der Ventil (30) zwischen der vorderen und der hinteren Position radial zu führen, wobei die zweite innere radiale Fläche (26, 29) den inneren Kanal (11) begrenzt.

15. Anschlusselement (1; 101; 301) nach einem der vorherigen Ansprüche, wobei jede Aufnahme (62; 162; 362) des Hülsenkörpers (60; 160; 360), die eine der Klemmkufen (50; 150; 350) aufnimmt, in Längsrichtung durch zwei parallele, einander gegenüberliegende axiale Wände (67, 68) und in Umfangsrichtung durch zwei parallele, einander gegenüberliegende orthoradiale Wände (69) begrenzt ist, wobei die axialen und orthoradialen Wände geeignet sind, um mit der Klemmkufe (50; 150; 350) in Kontakt zu kommen, um die radiale Verschiebung der Klemmkufe (50; 150; 350) in Bezug auf den Hülsenkörper (60; 160; 360) zu führen.

## Claims

1. A coupling element (1; 101; 201; 301) for a fluidic coupling to a terminal (80; 180; 280; 380), the terminal having an interface (81; 181; 381) with a cylindrical shell, the coupling element (1; 101; 201; 301) comprising:
- a coupling body (10; 110; 310) delimiting an inner conduit (11; 111; 311) for a flow of fluid (F), the inner conduit (11; 111; 311) extending along a longitudinal axis (X10; X110; X310),
- a valve (30; 130; 330) movable in translation longitudinally with respect to the coupling body (10; 110; 310) inside the inner conduit (11; 111; 311), the valve (30; 130; 330) being elastically returned along a forward direction (AV1; AV101; AV301) to a forward position, where the valve (30; 130; 330) closes the inner conduit (11; 111; 311), in an uncoupled configuration of the coupling element (1; 101; 201; 301), and
- clamping tabs (50; 150; 350),
**characterized in that** the coupling element (1; 101; 201; 301) comprises:
- a barrel body (60; 160; 360) arranged around a first radial surface (21; 121; 321) of the coupling body (10; 110; 310), the first radial surface (21; 121; 321) being radially oriented along the direction opposite the longitudinal axis (X10; X110; X310), the barrel body being longitudinally movable in translation with respect to the coupling body (10; 110; 310),
each clamping tab (50; 150; 350) being received in a respective opening (62; 162; 262; 362) belonging to the barrel body (60; 160; 360),
each clamping tab being displaced radially in translation with respect to the barrel body (60; 160; 360), within the respective opening thereof, and with respect to the coupling body (10; 110; 310), by mechanical cooperation of the clamping tab (50; 150; 350) with a tapered portion (16; 116; 316) of the coupling body (10; 110; 310), centered on the longitudinal axis (X10; X110; X310) and oriented along a rearward direction (AR1; AR101; AR301), said radial translational movement taking place from an initial radial position of the clamping tab (50; 150; 350), in the uncoupled configuration of the coupling element, to a radial clamping position of the clamping tab (50; 150; 350), offset along the longitudinal axis (X10; X110; X310) along the rearward direction (AR1; AR101; AR301) with respect to the initial radial position, each clamping tab (50; 150; 350) comprising a cooperating surface (51; 151; 351) formed radially opposite the tapered portion (16; 116; 316) and configured for mechanically cooperating with the terminal interface (81; 181; 381) and thereby preventing a withdrawal of the terminal (80; 180; 280); 380) with respect to the coupling body (10; 110; 310) when the clamping tab (50; 150; 350) is in the radial clamping position,
- a first elastic return member (61; 161; 361), returning the barrel body (60; 160; 360) along the forward direction (AV1; AV101; AV301), the barrel body (60; 160; 360) abutting along the forward direction (AV1; AV101; AV301) against the clamping tabs (50; 150; 350) when the clamping tabs (50; 150; 350) are in the radial clamping position,
- means of transmission (35; 135; 235; 335) interposed between the valve (30; 130; 330) and a drive element, among the barrel body (60; 160; 360) and at least one of the clamping tabs (50; 150; 350), the drive element being apt to drive the valve (30; 130; 330) via the means of transmission (35; 135; 235; 335), from the forward position to a rear position, where the valve (30; 130; 330) opens the inner conduit (11; 111; 311), when the clamping tabs (50; 150; 350) move from the initial radial position to the radial clamping position, and
- at least one port (17; 117; 317), provided through the coupling body (10; 110; 310), coupling the inner conduit (11; 111; 311) to a volume (71; 171; 371) surrounding the first radial surface (21; 121; 321) of the coupling body (10; 110; 310), the means of transmission (35; 135; 235; 335) extending through the port or the ports (17; 117; 317) when the valve (30; 130; 330) is in the rear position.

2. The coupling element (1; 201; 301) according to claim 1, wherein the means of transmission (35; 235; 335) are apt to cross longitudinally through the port or the ports (17) from the volume (71 371) surrounding the first radial surface (21; 321) of the coupling body (10; 310) to the inner conduit (11; 311).

3. A coupling element (1; 201) according to claim 2, wherein, along the longitudinal axis (X10), the or each port (17) has a length (L17) which is strictly less than a maximum travel (C30) traveled by the valve (30), when the barrel body (60) is moved longitudinally from the position thereof in the uncoupled configuration of the coupling element (1; 201) to a rear abutment position against the coupling body (10).

4. The coupling element (1; 201) according to any of claims 1 to 3, wherein the means of transmission (35; 235) are formed by one among the valve (30) or the drive element and form a first surface (37; 266) apt to abut along the longitudinal axis (X10) on a second surface (66; 237) belonging to the other among the drive element or the valve (30).

5. The coupling element (1; 201) according to claim 4, wherein the means of transmission (35; 235) comprise at least one longitudinal lug and wherein the port (17) is delimited by opposite guide surfaces (78) of the coupling body, along a direction circumferential to the longitudinal axis (X10; X110; X310), the longitudinal lug being apt to come into contact with each of the guide surfaces (78).

6. The coupling element (1) according to claim 5, wherein:
- the or each longitudinal lug is formed by the valve (30);
- the first surface (37) is formed at a front end of the valve (30); and
- the second surface (66) is formed at a rear end of the barrel body (60).

7. The coupling element (101) according to any of claims 1 to 3, wherein the means of transmission (135) are formed by a transmission ring, distinct from the barrel body (160), the clamping tabs (150) and the valve (130), the transmission ring having a front surface (137) apt to come into contact with a rear surface (142) of the barrel body (160) or of the clamping tabs (150) and having a rear surface (138) apt to come into contact with a front surface (139) of the valve (130).

8. The coupling element (1; 101; 201) according to any of the preceding claims, wherein, when the coupling element (1; 101; 201) is in the uncoupled configuration, the means of transmission (35; 135; 235) being longitudinally disengaged from the drive element and/or from the valve (30; 130).

9. The coupling element (301) according to any of claims 1 or 2, wherein in any configuration of the coupling element (301):
- the means of transmission (335) are rigidly attached to the drive element and to the valve (330) parallel to the longitudinal axis (X10; X110; X310); and
- in addition to the return of the barrel body (360) along the forward direction (AV1; AV101; AV301), the first elastic return member (361) returns the valve (330) to the forward position.

10. The coupling element (1; 101; 201) according to any of the preceding claims, wherein the coupling element (1; 101; 201) is configured for the fluidic coupling to the terminal (80; 180; 280), the interface (81; 181) of which having an inner cylindrical shell and wherein the tapered portion (16; 116) is formed by the first radial surface (21; 121) of the coupling body (10; 110).

11. The coupling element (1; 1; 201) according to claim 10, wherein the coupling element (1; 101; 201) comprises:
- a support ring (70; 170) which, when the coupling element (1; 101; 201) is in the uncoupled configuration, is mounted around the barrel body (60; 160) and the clamping tabs (50; 150), and
- a second elastic return member (76; 176) pushing the support ring back along the forward direction (AV1; AV101),
and wherein:
- the volume (71; 171) surrounding the first radial surface (21; 121) of the coupling body (10; 110) is delimited radially on the outside by the support ring (70; 170) and communicates fluidically with the inner conduit (11; 111) through the port or the ports (17; 117); and
- a front end of the support ring (70; 170) has a front seal (74; 174) for a leak-tight contact with the terminal (80; 180; 280), while the support ring (70; 170) is radially sealed with the coupling body (10; 110) at the rear of the volume (71; 171) radially delimited by the support ring and the first radial surface (21; 121) of the coupling body (10; 110).

12. The coupling element (1; 101; 201; 301) according to any of the preceding claims, wherein each clamping tab (50; 150; 350) has a front face (53; 153; 353) which defines the cooperating surface (51; 151; 351) along the forward direction (AV1; AV101), and wherein, in the uncoupled configuration:
- the clamping tabs (50; 150; 350) abut radially against an abutment surface (64; 164; 364) of the barrel body (60; 160; 360); and
- a part of the front face (53; 153; 353) of each clamping tab (50; 150; 350) emerges from a surface (63; 163; 363) of the barrel body opposite the abutment surface (64; 164; 364) and arranged at the front of the clamping tabs (50; 150; 350), each front face axially facing a mouth (23; 123; 323) of the coupling element (1; 101; 201; 301).

13. The coupling element (1; 101; 201; 301) according to any of the preceding claims, wherein the first elastic return member (61; 161; 361) is arranged radially on the outside with respect to the means of transmission (35; 135; 235; 335).

14. The coupling element (1; 201) according to any of the preceding claims, wherein the valve (30) includes:
- a solid central portion (32) defining, along with the coupling body (10), a passage (27) for the fluid (F) in the inner conduit (11), the passage (27) being reduced when the valve (30) is in the forward position, with respect to the rear position, the valve (30) in the forward position preferably abutting against the coupling body (10) via a seal (33) for closing the inner conduit (11) in a leak-tight way;
- a rear skirt (36); and
- a front skirt (34), the rear skirt (36) and the front skirt (34) being arranged on both sides of the solid central portion (32) along the longitudinal axis (X10) and mechanically cooperating with reduced radial play with a second inner radial surface (26, 29) of the coupling body (10), for a radial guiding of the movement of the valve (30) between the forward position and the rear position, the second inner radial surface (26, 29) delimiting the inner conduit (11).

15. The coupling element (1; 101; 301) according to any of the preceding claims, wherein each opening (62; 162; 362) of the barrel body (60; 160; 360) receiving one of the clamping tabs (50; 150; 350) is delimited longitudinally by two opposite parallel axial walls (67, 68) and circumferentially by two opposite parallel orthoradial walls (69), the axial and orthoradial walls being apt to come into contact with the clamping tab (50; 150); 350) so as to guide the radial displacement of the clamping tab (50; 150; 350) with respect to the barrel body (60; 160; 360).
